# EUROPÄISCHE PATENTSCHRIFT

(11) **EP 3 560 846 B1**
(45) Veröffentlichungstag und Bekanntmachung des Hinweises auf die Patenterteilung: **07.08.2024**
(21) Anmeldenummer: 18168647.8
(22) Anmeldetag: 23.04.2018
(51) Int. Cl.: B65B 35/18, B65G 47/91

(54) **VORRICHTUNG UND VERFAHREN ZUM TRANSFERIEREN VON BLISTERPACKUNGEN**
METHOD AND DEVICE FOR TRANSFERRING BLISTER PACKS
DISPOSITIF ET PROCÉDÉ DE TRANSFERT DES EMBALLAGES-COQUES

(43) Veröffentlichungstag der Anmeldung: 30.10.2019
(73) Patentinhaber: Uhlmann Pac-Systeme GmbH & Co. KG, 88471 Laupheim (DE)
(72) Erfinder: Hähnel, Bernd, 76297 Stutensee (DE); Binder, Sebastian, 88477 Schwendi (DE)
(74) Vertreter: Wächter, Jochen

(56) Entgegenhaltungen:
- EP-A1- 0 842 878
- EP-A1- 2 840 029
- WO-A1-2014/181307
- DE-A1- 102004 043 332
- DE-U1- 202011 110 538

## Beschreibung

Die vorliegende Erfindung betrifft eine Vorrichtung und ein Verfahren zum Transferieren von Blisterpackungen von einer Stanzstation, einem Transportmittel oder einem Zwischenspeicher auf ein Fördermittel oder in einen Speicher.

Blisterpackungen werden häufig in der pharmazeutischen Industrie bei der Verpackung von Medikamenten verwendet. Hierbei wird zunächst in einer Folienbahn eine Vielzahl von Näpfen gebildet, in welche Produkte, wie etwa Dragees oder Tabletten, eingebracht werden. Anschließend wird die Folienbahn mit den befüllten Näpfen mit einer Deckfolie versiegelt und einer Stanzstation zugeführt, in der die jeweiligen Blisterpackungen aus der Folienbahn ausgestanzt werden.

In einer weiteren Phase des Verpackungsprozesses werden die ausgestanzten Blisterpackungen mit Hilfe einer Transferiervorrichtung an ein Fördermittel übertragen. Die Blisterpackungen werden dabei in Stapeln in jeweiligen Aufnahmen des Fördermittels abgelegt. Abschließend werden die auf dem Fördermittel angeordneten Stapel von Blisterpackungen einer Verpackungsstation zugeführt, in der die Stapel von Blisterpackungen in entsprechende Verpackungen, wie etwa Faltschachteln, eingebracht werden. Die Zeit, welche die Transferiervorrichtung für die Übergabe von Blisterpackungen von der Stanzstation an das Fördermittel benötigt, hat logischerweise einen Einfluss auf den Durchsatz der gesamten Verpackungsmaschine.

EP 2 840 029 A1 offenbart eine Vorrichtung zum Transferieren von Blisterpackungen, die zwei gegenläufige Saugerarme umfasst. Jeder Saugerarm weist zwei Saugerarm-Segmente auf, die um jeweilige Drehachsen, die senkrecht zueinander verlaufen, drehbar sind. Zum Transferieren der Blisterpackungen wird jeder Saugerarm von einer Aufnahmestellung für Blisterpackungen zu einer Abgabestellung für Blisterpackungen und wieder zurück zunächst gemäß einer kombinierten Drehbewegung um die senkrecht zueinander verlaufenden Drehachsen und anschließend gemäß einer reinen Vertikalbewegung bewegt.

WO 2014/181307 A1 offenbart einen Greifarm einer Übergabeeinheit zum Transferieren von Blisterpackungen. Der Greifarm umfasst ein erstes Segment und ein zweites Segment, wobei das erste und das zweite Segment um Drehachsen drehbar sind, die parallel zueinander verlaufen.

Der Erfindung liegt die Aufgabe zugrunde, eine verbesserte Vorrichtung und ein Verfahren zum Transferieren von Blisterpackungen von einer Stanzstation, einem Transportmittel oder einem Zwischenspeicher an ein Fördermittel oder in einen Speicher zu schaffen, wobei der Transfer von Blisterpackungen besonders effizient, präzise und schnell erfolgt.

Diese Aufgabe wird durch die Merkmale des Anspruchs 1 und des Anspruchs 10 gelöst.

Die erfindungsgemäße Vorrichtung zum Transferieren von Blisterpackungen umfasst eine erste Übergabeeinheit zur Übergabe der Blisterpackungen von einer Stanzstation, einem Transportmittel oder einem Zwischenspeicher zu einer Zwischenablage und eine zweite Übergabeeinheit zur Übergabe der Blisterpackungen von der Zwischenablage auf ein Fördermittel oder in einen Speicher. Die zweite Übergabeeinheit weist einen Saugerarm auf, der bewegbar ist zwischen einer Aufnahmestellung zum Aufnehmen mehrerer Blisterpackungen von mehreren Zwischenablagepositionen auf der Zwischenablage und einer Abgabestellung zum Ablegen der mehreren Blisterpackungen in mehreren Endablagepositionen auf dem Fördermittel oder in dem Speicher. Der Saugerarm weist ein erstes Segment und ein zweites Segment auf, wobei das erste Segment des Saugerarms um eine zugehörige erste Achse drehbar befestigt ist. Das erste Segment des Saugerarms weist einen Abschnitt auf, an dem das zweite Segment drehbar um eine zur ersten Achse im Wesentlichen senkrecht verlaufende ortsveränderliche zweite Achse befestigt ist. An dem zweiten Segment ist eine Saugvorrichtung zum Ansaugen und Halten der Blisterpackungen angeordnet. Der Saugerarm ist derart ausgestaltet und angesteuert, dass die Bewegung des Saugerarms von der Aufnahmestellung zur Abgabestellung und zurück eine kombinierte Bewegung ist, die sich zumindest aus einer ersten Drehbewegung des ersten Segments und des zweiten Segments um die erste Achse und einer zweiten Drehbewegung des zweiten Segments um die zweite Achse zusammensetzt. Der Saugerarm ist derart ausgestaltet und angesteuert, dass die Blisterpackungen in den Zwischenablagepositionen von der Saugvorrichtung des Saugerarms gleichzeitig von oben aufgenommen und ebenfalls gleichzeitig von oben in die Endablagepositionen abgelegt werden. Die mehreren Zwischenablagepositionen sind in einer Reihe parallel zur ersten Achse nebeneinander angeordnet und bilden gemeinsam einen Zwischenablagepositionsbereich. Die mehreren Endablagepositionen sind in einer Reihe parallel zur ersten Achse nebeneinander angeordnet und bilden gemeinsam einen Endablagepositionsbereich.

Auf diese Weise wird eine zuverlässige Übergabe von Blisterpackungen gewährleistet, bei der auf einfache Weise und mit hohem Durchsatz Blisterpackungen auf ein mehrbahniges Fördermittel oder in einen mehrbahnigen Speicher übergeben werden.

In einer ersten Alternative ist die zweite Achse des Saugerarms derart angeordnet, dass sie sich während der ersten Drehbewegung des ersten Segments des Saugerarms in einer Ebene bewegt, die den Zwischenablagepositionsbereich und den Endablagepositionsbereich jeweils in einer geraden Linie schneidet, wobei die Linien im Bereich einer Mitte des Zwischenablagepositionsbereichs und einer Mitte des Endablagepositionsbereichs angeordnet sind. Dies sorgt auf einfache Weise für eine geradlinige mehrbahnige Übergabe.

In einer zweiten Alternative ist die zweite Achse des Saugerarms derart angeordnet, dass sie sich während der ersten Drehbewegung des ersten Segments des Saugerarms in einer Ebene bewegt, die den Zwischenablagepositionsbereich oder dessen seitliche Projektion in einer geraden Linie schneidet, die seitlich versetzt zur Mitte des Zwischenablagepositionsbereichs ist. Damit wird auf einfache Weise ein seitlicher Versatz der mehreren Blisterpackungen ermöglicht.

Bevorzugt führen das zweite Segment und somit die an der Saugvorrichtung gehaltenen Blisterpackungen eine Drehbewegung um die zweite Achse von im Wesentlichen 180° aus, wenn sich der Saugerarm von der Aufnahmestellung zur Abgabestellung oder umgekehrt bewegt. Diese Drehbewegung sorgt auf einfache Weise dafür, dass sich die Blisterpackungen während der Übergabe um 180° um ihre Mittelpunkte drehen. Dies wiederum gewährleistet, dass die Blisterpackungen mit der Deckfolienseite nach oben abgelegt werden können.

Es ist auch bevorzugt, dass das erste Segment eine Drehbewegung um die erste Achse von 120° bis 180° ausführt, wenn sich der Saugerarm von der Aufnahmestellung zur Abgabestellung oder umgekehrt bewegt. Es ist denkbar, dass die Saugvorrichtung vom zweiten Segment des Saugerarms schräg abragt, sodass das erste Segment lediglich über einen geringeren Winkelbereich um die erste Achse verschwenkt werden muss als der Winkel von 180°, der von den Blisterpackungen von den Zwischenablagepositionen zu den Endablagepositionen zurückzulegen ist.

Zur Anpassung an verschiedene Formate der Blisterpackungen kann der Saugerarm parallel zur ersten Achse verschiebbar gelagert sein.

Es ist bevorzugt, dass die Saugvorrichtung mehrere Saugköpfe umfasst, die mittels mindestens eines Trägerarms am zweiten Segment befestigt sind. Besonders bevorzugt ist der mindestens eine Trägerarm starr am zweiten Segment befestigt.

Um den vom ersten Segment zu überstreichenden Winkelbereich zu reduzieren, kann der mindestens eine Trägerarm in der Aufnahmestellung und in der Abgabestellung vom zweiten Segment schräg nach unten abragen.

Das erfindungsgemäße Verfahren zum Transferieren von Blisterpackungen von einer Stanzstation, einem Transportmittel oder einem Zwischenspeicher zu einer Zwischenablage und von der Zwischenablage auf ein Fördermittel oder in einen Speicher, das mittels der erfindungsgemäßen Vorrichtung zum Transferieren von Blisterpackungen durchgeführt wird, umfasst folgende Schritte:
- Übergeben mehrerer Blisterpackungen von der Stanzstation, dem Transportmittel oder dem Zwischenspeicher zu der Zwischenablage, wobei die Blisterpackungen auf der Zwischenablage in einer Reihe nebeneinander in mehreren Zwischenablagepositionen abgelegt werden; und
- Aufnehmen der mehreren Blisterpackungen in den mehreren Zwischenablagepositionen von der Zwischenablage, Bewegen der Blisterpackungen und Ablegen der Blisterpackungen in mehreren Endablagepositionen auf dem Fördermittel oder in dem Speicher, wobei die Blisterpackungen in den Endablagepositionen in einer Reihe nebeneinander, die parallel zur Reihe der Blisterpackungen in den Zwischenablagepositionen ist, angeordnet sind.
Dabei werden die Blisterpackungen in den Zwischenablagepositionen gleichzeitig von oben aufgenommen und ebenfalls gleichzeitig von oben in den Endablagepositionen auf dem Fördermittel oder in dem Speicher abgelegt, und die Blisterpackungen werden in den Endablagepositionen im Vergleich zu den Zwischenablagepositionen mit derselben Seite nach oben, aber um 180° um ihre Mittelpunkte gedreht abgelegt.

Auf diese Weise wird eine zuverlässige Übergabe von Blisterpackungen gewährleistet, bei der auf einfache Weise und mit hohem Durchsatz Blisterpackungen auf ein mehrbahniges Fördermittel oder in einen mehrbahnigen Speicher übergeben werden.

Bevorzugt wird das Aufnehmen, Bewegen und Ablegen der Blisterpackungen von der Zwischenablage auf dem Fördermittel oder in den Speicher mittels eines Saugerarms durchgeführt, der eine hin- und hergehende Schwenkbewegung ausführt. Auf diese Weise werden die Blisterpackungen schonend behandelt und mit hohem Durchsatz übergeben.

In einer besonderen Ausgestaltung werden bei einer geradzahligen Anzahl von Blisterpackungen alle Blisterpackungen in den Endablagepositionen im Vergleich zu den Zwischenablagepositionen an vertauschten Positionen abgelegt; oder bei einer ungeradzahligen Anzahl von Blisterpackungen werden alle Blisterpackungen bis auf eine mittlere Blisterpackung in den Endablagepositionen im Vergleich zu den Zwischenablagepositionen an vertauschten Positionen abgelegt.

In einer bevorzugten Ausführungsform umfasst das Übergeben der Blisterpackungen von der Stanzstation, dem Transportmittel oder dem Zwischenspeicher zu der Zwischenablage die Schritte des Aufnehmens der mehreren Blisterpackungen in mehreren Bereitstellpositionen von der Stanzstation, dem Transportmittel oder dem Zwischenspeicher, des Bewegens der Blisterpackungen und des Ablegens der Blisterpackungen in den Zwischenablagepositionen auf der Zwischenablage, wobei die Blisterpackungen in den Bereitstellpositionen von oben aufgenommen und ebenfalls von oben in den Zwischenablagepositionen auf die Zwischenablage abgelegt werden.

Bevorzugt sind die Blisterpackungen in den Bereitstellpositionen in einer Reihe nebeneinander, parallel zu den Reihen der Blisterpackungen in den Zwischenablagepositionen und den Endablagepositionen, angeordnet, und die Blisterpackungen werden in den Zwischenablagepositionen im Vergleich zu den Bereitstellpositionen mit derselben Seite nach oben, aber um 180° um ihre Mittelpunkte gedreht abgelegt.

Dabei ist es bevorzugt, dass das Übergeben der Blisterpackungen von der Stanzstation, dem Transportmittel oder dem Zwischenspeicher zu der Zwischenablage gleichzeitig erfolgt.

Vorzugsweise sind die Blisterpackungen in den Zwischenablagepositionen sowie in den Endablagepositionen mit der Deckfolie nach oben angeordnet. Außerdem ist es bevorzugt, wenn die Blisterpackungen in den Bereitstellpositionen mit der Deckfolie nach oben angeordnet sind.

Weitere Eigenschaften und Vorteile der vorliegenden Erfindung ergeben sich aus der nachfolgenden Beschreibung unter Bezugnahme auf die Zeichnungen.

Weitere Eigenschaften und Vorteile der vorliegenden Erfindung ergeben sich aus der nachfolgenden Beschreibung unter Bezugnahme auf die Zeichnungen.
- Fig. 1: ist eine schematische Perspektivansicht einer erfindungsgemäßen Vorrichtung zum Transferieren von Blisterpackungen;
- Fig. 2a und 2b: sind Draufsichten auf Vorrichtungen wie in Fig. 1 in verschiedenen Stadien des Übergabeprozesses;
- Fig. 3 bis 6: sind schematische Perspektivansichten der Vorrichtung aus Fig. 1, die unterschiedliche Stadien des Übergabeprozesses darstellen;
- Fig. 7: ist eine schematische Perspektivansicht von zwei Saugerarmen, die bei der Vorrichtung gemäß Fig. 1 in der zweiten Übergabeeinheit verwendet werden;
- Fig. 8: ist eine schematische Perspektivansicht der wesentlichen Antriebskomponenten eines Saugerarms aus Fig. 7;
- Fig. 9: ist eine Querschnittsansicht zur Darstellung des inneren Aufbaus eines Saugerarms aus Fig. 7;
- Fig. 10: ist eine schematische Perspektivansicht eines Mechanismus zur Anpassung der Drehbewegung des zweiten Segments des Saugerarms aus Fig. 9 um die zweite Achse ;
- Fig. 11: ist eine schematische Perspektivansicht einer Variante der erfindungsgemäßen Vorrichtung;
- Fig. 12: ist eine Draufsicht auf die Variante der erfindungsgemäßen Vorrichtung aus Fig. 11;
- Fig. 13 bis 15: sind schematische Perspektivansichten der Vorrichtung aus Fig. 11, die unterschiedliche Stadien des Übergabeprozesses darstellen;
- Fig. 16: ist eine schematische Perspektivansicht einer weiteren Variante der erfindungsgemäßen Vorrichtung;
- Fig. 17: ist eine Draufsicht auf die Variante der erfindungsgemäßen Vorrichtung aus Fig. 16; und
- Fig. 18 bis 20: sind schematische Perspektivansichten der Vorrichtung aus Fig. 16, die unterschiedliche Stadien des Übergabeprozesses darstellen.

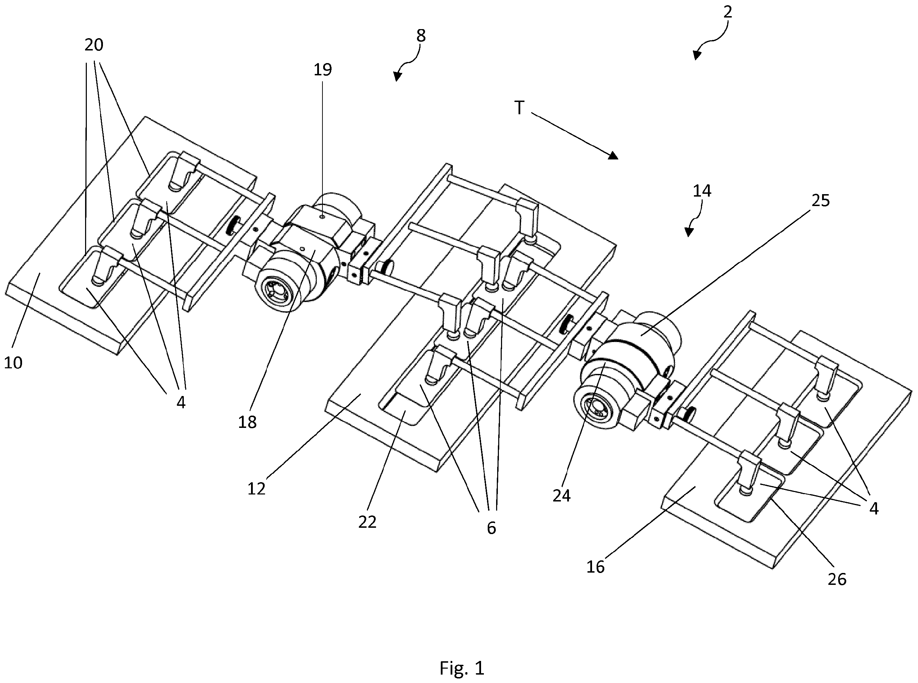

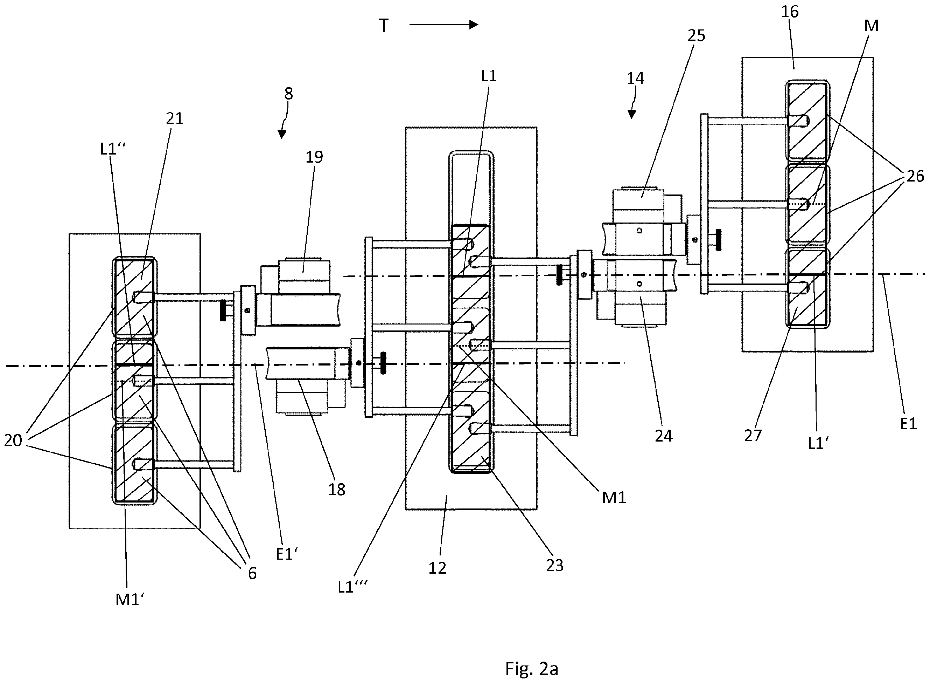

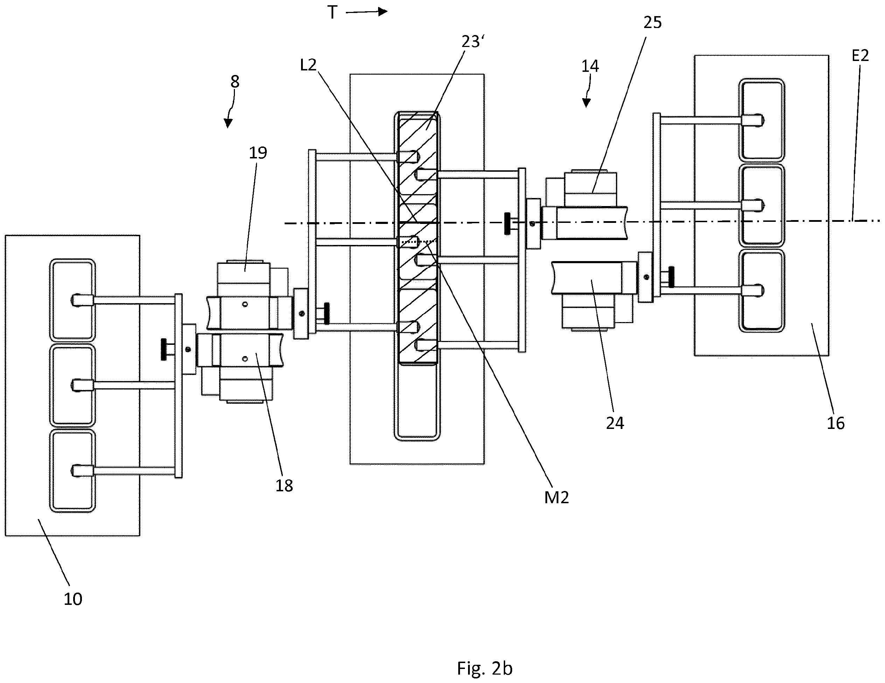

Fig. 1 bis 6 zeigt eine erfindungsgemäße Vorrichtung 2 zum Transferieren von Blisterpackungen 4, 6. In Fig. 1 und Fig. 3 bis 6 ist die Vorrichtung 2 zum Transferieren von Blisterpackungen 4, 6 in verschiedenen Stadien des Übergabeprozesses dargestellt. Fig. 2a und 2b sind Draufsichten auf die Vorrichtung 2.

Die Vorrichtung 2 zum Transferieren von Blisterpackungen 4, 6 umfasst eine erste Übergabeeinheit 8, die die Blisterpackungen 4, 6 von einer Stanzstation 10 zu einer Zwischenablage 12 übergibt, sowie eine zweite Übergabeeinheit 14, die die Blisterpackungen 4, 6 von der Zwischenablage 12 an ein Fördermittel 16 übergibt. Die Transferrichtung der Blisterpackungen 4, 6 ist in den Figuren durch den Pfeil T gekennzeichnet.

Die Stanzstation 10, die Zwischenablage 12 und das Fördermittel 16 sind in den Figuren lediglich schematisch dargestellt. Üblicherweise werden im Bereich der Stanzstation 10 die Blisterpackungen 4, 6 unmittelbar nach dem Stanzvorgang bereitgestellt. Ebenso ist es jedoch möglich, dass im Ausgangsbereich der Stanzstation 10 ein Transportmittel (nicht dargestellt) vorgesehen ist, das die Blisterpackungen 4, 6 nach dem Stanzvorgang weiter transportiert, bis sie von der ersten Übergabeeinheit 8 ergriffen werden. Ein solches Transportmittel bewegt sich vorzugsweise getaktet und in Transferrichtung T. Schließlich ist es auch möglich, dass die Blisterpackungen 4, 6 nach dem Stanzvorgang zunächst in einem Zwischenspeicher (nicht dargestellt) gespeichert werden, aus dem die Übergabeeinheit 8 jeweils die oben bzw. vorne liegenden Blisterpackungen 4, 6 entnimmt.

Das Fördermittel 16 bewegt sich vorzugsweise in Transferrichtung T. Das Fördermittel 16 kann als eine umlaufende Packgutkette ausgebildet sein, die kontinuierlich oder vorzugsweise getaktet bewegt wird. Ebenso ist es denkbar, dass das Fördermittel 16 als ein Linearmotorsystem ausgebildet ist. Wenn das Fördermittel 16 getaktet bewegt wird oder wenn die einzelnen Schlitten des umlaufenden Linearmotorsystems an der Position, an der ihnen die Blisterpackungen 4, 6 zugeführt werden, während der Übergabe stillstehen, können in den Fächern des Fördermittels 16 Stapel von zwei oder mehr aufeinander liegenden Blisterpackungen 4, 6 gebildet werden. Es ist auch denkbar, die Blisterpackungen 4, 6 nicht direkt an das Fördermittel 16, sondern zunächst an einen Speicher (nicht dargestellt) zu übergeben.

Die erste Übergabeeinheit 8 weist einen ersten Saugerarm 18 und einen zweiten Saugerarm 19 auf. Der erste Saugerarm 18 und der zweite Saugerarm 19 sind quer zur Transferrichtung T (siehe Fig. 2a) nebeneinander angeordnet. Der erste Saugerarm 18 ist bewegbar zwischen einer Aufnahmestellung, die in Fig. 2b dargestellt ist, zum Aufnehmen von ersten Blisterpackungen 4 von Bereitstellpositionen 20 in der Stanzstation 10 und einer Abgabestellung (Fig. 2a) zum Ablegen der ersten Blisterpackungen 4 in Zwischenablagepositionen 22 auf der Zwischenablage 12.

Ebenso ist der zweite Saugerarm 19 bewegbar zwischen einer Aufnahmestellung zum Aufnehmen von zweiten Blisterpackungen 6 von den Bereitstellpositionen 20 (siehe Fig. 2a) und einer Abgabestellung zum Ablegen der zweiten Blisterpackungen 6 in den Zwischenablagepositionen 22 auf der Zwischenablage 12 (Fig. 2b).

In der hier dargestellten bevorzugten Ausführungsform sind die Saugerarme 18, 19 so angesteuert, dass sie eine entgegengesetzte Bewegung von ihrer Aufnahmestellung zu ihrer Abgabestellung und zurück ausführen. Jeder Saugerarm 18, 19 kann gleichzeitig mehrere Blisterpackungen 4, 6 übergeben. Auf diese Weise werden die Blisterpackungen 4, 6 von den Bereitstellpositionen 20 in der Stanzstation 10 gleichzeitig von der ersten Übergabeeinheit 8 ergriffen und ebenfalls gleichzeitig in die Zwischenablagepositionen 22 auf der Zwischenablage 12 abgelegt. Neben der dargestellten Ausführungsform existieren viele weitere Möglichkeiten der Ausgestaltung der ersten Übergabeeinheit 8. Beispielsweise ist es denkbar, die Blisterpackungen 4, 6 mittels eines einzigen Saugerarms zu übergeben. Ebenso ist es denkbar, anstelle der Saugerarme 18, 19 Greifvorrichtungen einzusetzen. Schließlich ist es auch möglich, mittels einer anders gestalteten Übergabeeinheit 8 die Blisterpackungen 4, 6 nicht gleichzeitig, sondern zeitlich versetzt zu übergeben.

Die zweite Übergabeeinheit 14 weist einen ersten Saugerarm 24 und einen zweiten Saugerarm 25 auf, die quer zur Transferrichtung T in einer Reihe nebeneinander angeordnet sind. Der erste Saugerarm 24 ist bewegbar zwischen einer Aufnahmestellung (siehe Fig. 2a) zum Aufnehmen der Blisterpackungen 4 von den Zwischenablagepositionen 22 auf der Zwischenablage 12 und einer Abgabestellung (siehe Fig. 2b) zum Ablegen der ersten Blisterpackungen 4 in Endablagepositionen 26 auf dem Fördermittel 16.

Der zweite Saugerarm 25 der zweiten Übergabeeinheit 14 ist bewegbar zwischen einer Aufnahmestellung (siehe Fig. 2b) zum Aufnehmen der zweiten Blisterpackungen 6 von den Zwischenablagepositionen 22 auf der Zwischenablage 12 und einer Abgabestellung (siehe Fig. 2a) zum Ablegen der zweiten Blisterpackungen 6 in denselben Endablagepositionen 26, in denen der erste Saugerarm 24 die ersten Blisterpackungen 4 ablegt.

Die beiden Saugerarme 24, 25 sind, von den Befestigungspunkten ihrer Saugvorrichtungen 34 abgesehen, spiegelsymmetrisch bezüglich einer Längsmittelebene der Übergabeeinheit 14 angeordnet und aufgebaut. Die beiden Saugerarme 24, 25 führen gegenläufige hin- und hergehende Schwenkbewegungen aus. Wenn der erste Saugerarm 24 sich in der Aufnahmestellung befindet, befindet sich der zweite Saugerarm 25 in seiner Abgabestellung oder zumindest in der Nähe der Abgabestellung. Wenn sich der erste Saugerarm 24 in der Abgabestellung befindet, befindet sich der zweite Saugerarm 25 in seiner Aufnahmestellung oder zumindest in der Nähe der Aufnahmestellung. Die Aufnahmestellung des ersten Saugerarms 24 unterscheidet sich räumlich von der Aufnahmestellung des zweiten Saugerarms 25. Ebenso unterscheidet sich die Abgabestellung des ersten Saugerarms 24 von der Abgabestellung des zweiten Saugerarms 25.

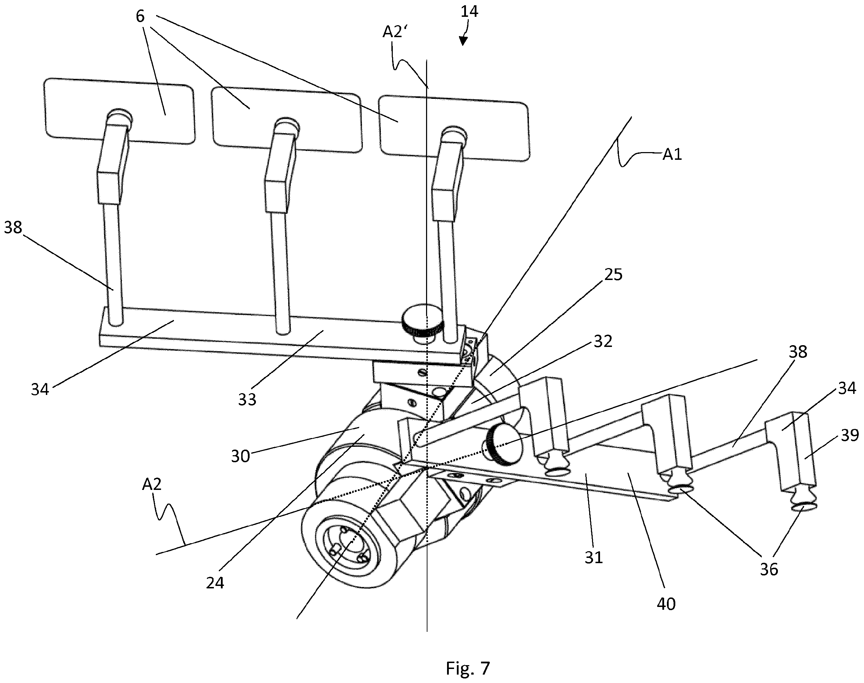

Die Bereitstellpositionen 20 in der Stanzstation 10, die Zwischenablagepositionen 22 auf der Zwischenablage 12 und die Endablagepositionen 26 auf dem Fördermittel 16 sind jeweils vorzugsweise in der Form der zu übergebenden Blisterpackungen 4, 6 ausgebildet. Bei herkömmlichen Blisterpackungen 4, 6 werden die genannten Positionen somit im Wesentlichen eine rechteckförmige Gestalt aufweisen. In der dargestellten Ausführungsform sind die oben genannten Positionen jeweils derart angeordnet, dass sich die längere Seite der Positionen quer zur Transferrichtung T erstreckt. Wie aus Fig. 2a ersichtlich ist, sind die Zwischenablagepositionen 22 in einer Reihe parallel zu der Reihe der Bereitstellpositionen 20 angeordnet, und die Endablagepositionen 26 sind in einer Reihe parallel zu der Reihe der Zwischenablagepositionen 22 angeordnet. Alle Reihen sind jeweils parallel zur ersten Achse A1 der Saugerarme 24, 25 (siehe Fig. 7). Es erfolgt jeweils ein seitlicher Versatz der Blisterpackungen 4, 6 quer zur Transferrichtung T zwischen den Bereitstellpositionen 20 und den Zwischenablagepositionen 22 und zwischen den Zwischenablagepositionen 22 und den Endablagepositionen 26. Die Bereitstellpositionen 26 bilden einen Bereitstellpositionsbereich 21 (schraffiert in Fig. 2a). Die Zwischenablagepositionen 22 für den ersten Saugerarm 24 bilden zusammen einen Zwischenablagepositionsbereich 23 (schraffiert in Fig. 2a) und die Zwischenablagepositionen 22 für den zweiten Saugerarm 25 bilden zusammen einen Zwischenablagebereich 23' (schraffiert in Fig. 2b). Die Endablagepositionen 26 bilden zusammen einen Endablagepositionsbereich 27 (schraffiert in Fig. 2a). Während der Bereitstellpositionsbereich 21 für beide Saugerarme 18, 19 identisch ist, ist der Zwischenablagepositionsbereich 23 des ersten Saugerarms 18 seitlich versetzt zum Zwischenablagepositionsbereich 23' des zweiten Saugerarms 19. Die Saugerarme 24, 25 nehmen dann die Blisterpackungen 4, 6 an den Zwischenablagepositionsbereichen 23 bzw. 23' auf und legen sie auf demselben Endablagepositionsbereich 27 ab.

Bezug nehmend auf Fig. 7 bis 10 werden nun Details der zweiten Übergabeeinheit 14 näher beschrieben. Wie aus Fig. 7 hervorgeht, weist der erste Saugerarm 24 ein erstes Segment 30 und ein zweites Segment 31 auf. Das erste Segment 30 des ersten Saugerarms 24 ist um eine erste Achse A1, die senkrecht zur Längsmittelebene L verläuft, drehbar befestigt. Das erste Segment des ersten Saugerarms 24 weist einen Abschnitt auf, an dem das zweite Segment 31 drehbar um eine zur ersten Achse A1 im Wesentlichen senkrecht verlaufende ortsveränderliche zweite Achse A2 befestigt ist. An dem zweiten Segment 31 ist eine Saugvorrichtung 34 zum Ansaugen und Halten der Blisterpackungen 4 angeordnet.

Der zweite Saugerarm 25 weist ebenfalls ein erstes Segment 32 und ein zweites Segment 33 auf. Das erste Segment 32 des zweiten Saugerarms 25 ist um dieselbe erste Achse A1 drehbar befestigt. Das erste Segment 32 des zweiten Saugerarms 25 weist außerdem einen Abschnitt auf, an dem das zweite Segment 33 drehbar um eine weitere zur ersten Achse A1 im Wesentlichen senkrecht verlaufende ortsveränderliche zweite Achse A2' befestigt ist. An dem zweiten Segment 33 ist ebenfalls eine Saugvorrichtung 34 zum Ansaugen und Halten von Blisterpackungen 6 angeordnet.

Die Saugerarme 24, 25 sind derart ausgestaltet und angesteuert, dass die Bewegung der Saugerarme 24, 25 von ihrer jeweiligen Aufnahmestellung zu ihrer jeweiligen Abgabestellung und zurück eine kombinierte Bewegung ist, die sich zumindest aus einer ersten Drehbewegung des ersten Segments 30, 32 und des zweiten Segments 31, 33 um die erste Achse A1 und einer zweiten Drehbewegung des zweiten Segments 31, 33 um die jeweils zugehörige zweite Achse A2, A2' zusammensetzt.

Wie aus Fig. 2a hervorgeht, ist die zweite Achse A2 des ersten Saugerarms 24 derart angeordnet, dass sie sich während der ersten Drehbewegung um die erste Achse A1 in einer ersten Ebene E1 bewegt, die den Zwischenablagepositionsbereich 23 oder dessen seitliche Projektion in einer ersten geraden Linie L1 schneidet. Diese erste gerade Linie L1 ist seitlich versetzt zur Mitte M1 des Zwischenablagepositionsbereichs 23 angeordnet. Ebenso schneidet die Ebene E1 den Endablagepositionsbereich 27 oder dessen seitliche Projektion in einer geraden Linie L1', die seitlich versetzt zur Mitte M des Endablagepositionsbereichs 27 angeordnet ist.

Die zweite Achse A2' des zweiten Saugerarms 25 ist derart angeordnet, dass sie sich während der ersten Drehbewegung des zweiten Saugerarms 25 um die erste Achse A1 in einer zweiten Ebene E2 bewegt (Fig. 2b), die den Zwischenablagepositionsbereich 23' oder dessen seitliche Projektion in einer zweiten geraden Linie L2 schneidet, die seitlich versetzt zur Mitte M2 des Zwischenablagepositionsbereichs 23' ist. Ebenso schneidet die Ebene E2 den Endablagepositionsbereich 27 oder dessen seitliche Projektion in einer geraden Linie (nicht dargestellt), die seitlich versetzt zur Mitte M des Endablagepositionsbereichs 27 angeordnet ist.

Ebenso ist die zweite Achse A2 des ersten Saugerarms 18 der ersten Übergabeeinheit 8 derart angeordnet, dass sie sich während der ersten Drehbewegung des ersten Saugerarms 18 um die erste Achse A1 in einer Ebene E1' bewegt (Fig. 2a), die den Zwischenablagepositionsbereich 23 oder dessen seitliche Projektion in einer geraden Linie L1‴ schneidet, die seitlich versetzt zur Mitte M1 des Zwischenablagepositionsbereichs 23 ist. Die Ebene E1' schneidet auch den Bereitstellpositionsbereich 21 oder dessen seitliche Projektion in einer geraden Linie L1", die seitlich versetzt zur Mitte M1' des Bereitstellpositionsbereichs 21 ist (Fig. 2a).

Schließlich ist die zweite Achse A2 des zweiten Saugerarms 19 der ersten Übergabeeinheit 8 derart angeordnet, dass sie sich während der ersten Drehbewegung des ersten Saugerarms 18 um die erste Achse A1 in einer Ebene (nicht dargestellt) bewegt, die den Zwischenablagepositionsbereich 23' oder dessen seitliche Projektion in einer geraden Linie (nicht dargestellt)' schneidet, die seitlich versetzt zur Mitte M2 des Zwischenablagepositionsbereichs 23' ist. Diese Ebene schneidet auch den Bereitstellpositionsbereich 21 oder dessen seitliche Projektion in einer geraden Linie (nicht dargestellt), die seitlich versetzt zur Mitte M1' des Bereitstellpositionsbereichs 21 ist.

Bezug nehmend auf Fig. 7 umfasst die Saugvorrichtung 34 jedes Saugerarms 24, 25 mehrere Saugköpfe 36, die mittels eines Trägerarms 38 am zweiten Segment 31, 33 befestigt sind. Es ist jeweils mindestens ein Saugkopf 36 je Blisterpackung 4, 6 vorgesehen. Es können auch mehrere separate Trägerarme 38 zur Verbindung mit dem zweiten Segment 31, 33 vorliegen. In der dargestellten Ausführungsform ist der Trägerarm 38 rechenförmig ausgebildet und umfasst mehrere Finger 39, an deren Spitze jeweils ein Saugkopf 36 angeordnet ist. Der Trägerarm 38 ist vorzugsweise starr am zweiten Segment 31, 33 befestigt. In der dargestellten Ausführungsform ragen die Finger 39 des Trägerarms 38 von einer gemeinsamen Verbindungsstrebe 40 senkrecht ab. Die Verbindungsstrebe 40 ist wiederum mittels eines senkrecht zu ihr verlaufenden Verbindungsglieds 42 mit dem zweiten Segment 31, 33 verbunden. In der dargestellten Ausführungsform ist das Verbindungsglied 42 des Trägerarms 38 senkrecht mit dem zweiten Segment 31, 33 verbunden. Ebenso ist es denkbar, dass das Verbindungsglied 42 und somit der Trägerarm 38 schräg vom zweiten Segment 31, 33 abragt. In der jeweiligen Aufnahmestellung und Abgabestellung der Saugerarme 24, 25 ragt das Verbindungsglied 42 und somit der Trägerarm 38 jeweils schräg nach unten ab. Auf diese Weise könnte der Winkel, den der jeweilige Saugerarm 24, 25 um die erste Achse A1 zurücklegen muss, reduziert werden.

Wie aus Fig. 2a und 7 hervorgeht, ist das zweite Segment 31, 33 des ersten oder zweiten Saugerarms 24, 25 in der jeweiligen Aufnahmestellung bezüglich der Längsmittelebene der Übergabeeinheit 14 in eine erste Richtung geschwenkt. Konkret ist der Abschnitt des zweiten Segments 31, 33, an dem der Trägerarm 38 befestigt ist, in die erste Richtung geschwenkt. Ebenso ist erkennbar, dass das zweite Segment 31, 33 des ersten oder zweiten Saugerarms 24, 25, konkret derjenige Abschnitt des zweiten Segments 31, 33, an dem der Trägerarm 38 befestigt ist, in der jeweiligen Abgabestellung bezüglich der Längsmittelebene der Übergabeeinheit 14 in eine zweite Richtung, entgegen der ersten Richtung, geschwenkt ist.

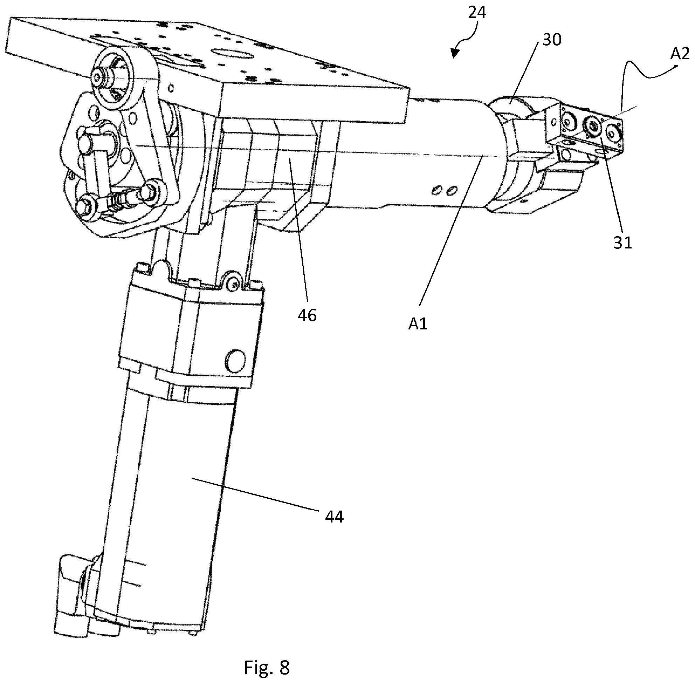

Bezug nehmend auf Fig. 8 bis 10 werden nun Details eines möglichen Antriebs für den Saugerarm 24 beschrieben.

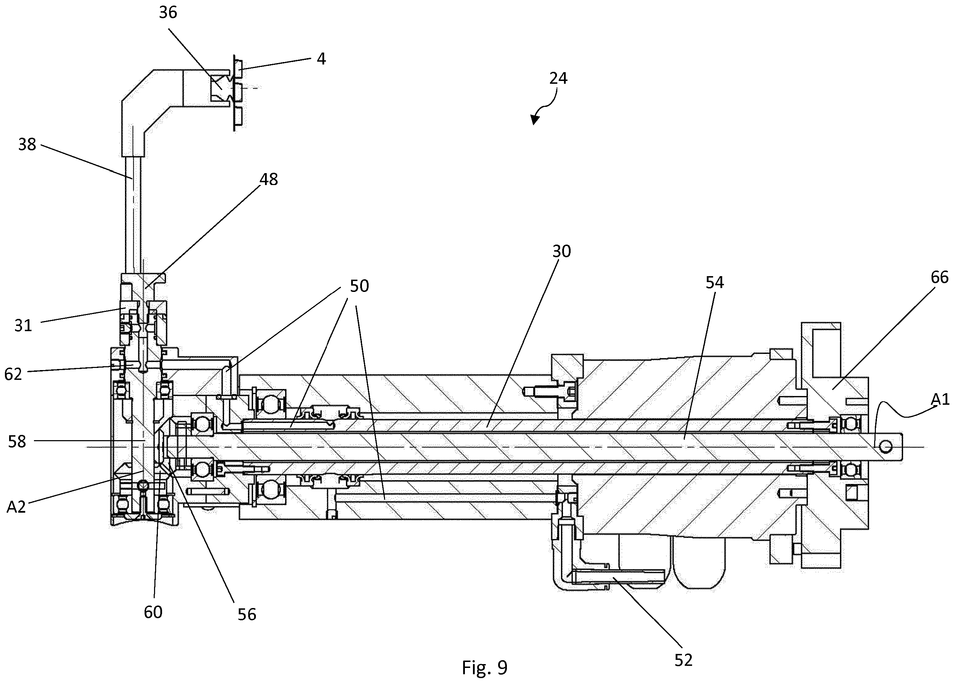

In Fig. 8 ist ein Motor 44 erkennbar, der über ein Getriebe 46 das erste Segment 30 um die erste Achse A1 hin- und zurückschwenkt. Das um die zweite Achse A2 schwenkbare zweite Segment 31 ist ohne die daran befestigte Saugvorrichtung 34 dargestellt. Die Saugvorrichtung 34 ist vorzugsweise ein Formatteil, das je nach Art und Größe der zu übergebenden Blisterpackungen 4, 6 ausgetauscht werden kann. Zur lösbaren Befestigung des Trägerarms 38 der Saugvorrichtung 34 am zweiten Segment 31 ist vorzugsweise eine Rändelschraube 48 (siehe Fig. 9) vorgesehen. Zur weiteren Anpassung an unterschiedliche Formate können die Saugerarme 24, 25 auch parallel zur ersten Achse A1 verschiebbar gelagert sein, und/oder in Längsrichtung verschiebbar sein.

In der Querschnittsansicht nach Fig. 9 sind der Motor 44 und das Getriebe 46 nicht dargestellt. Vom Motor 44 wird das erste Segment 30 des Saugerarms 24, das als Hohlwelle ausgebildet ist, angetrieben. Bei Betätigung des Motors 44 wird das erste Segment 30 um die erste Achse A1 hin- und hergeschwenkt. Das zweite Segment 31 ist in einem Abschnitt des ersten Segments 30 um die zweite Achse A2 drehbar gelagert. Im ersten Segment 30 sind Luftkanäle 50 enthalten, die mit einem Vakuumanschluss 52 für die Saugköpfe 36 verbunden sind. Im Inneren des ersten Segments 30 ist zudem eine Welle 54 angeordnet, an deren einem Ende, das dem zweiten Segment 31 zugewandt ist, ein Kegelrad 56 starr befestigt ist.

Das zweite Segment 31 umfasst eine zentrale Welle 58, die drehbar in dem Endabschnitt des ersten Segments 30 gelagert ist und sich bei einer Drehbewegung des ersten Segments 30 um die erste Achse A1 mit dem ersten Segment 30 mitdreht. Fest mit der Welle 58 ist ein weiteres Kegelrad 60 verbunden, das bei einer Drehbewegung des ersten und zweiten Segments 30, 31 um die erste Achse A1 mit dem Kegelrad 56 kämmt. Eine Ringnut 62 in der Welle 58 dient zur Herstellung einer Verbindung mit den Luftkanälen 50 im ersten Segment 30 auch während einer Drehbewegung des zweiten Segments 31 um die zweite Achse A2.

Wenn nun das erste Segment 30 und somit auch das zweite Segment 31 um die erste Achse A1 verschwenkt werden, läuft das Kegelrad 60 am unbewegten Kegelrad 56 ab und versetzt somit die Welle 58 in eine Drehbewegung um die zweite Achse A2. Bei einer Übersetzung von 1:1 zwischen den Kegelrädern 56, 60 bringt somit eine Schwenkung des ersten Segments 30 und des zweiten Segments 31 um die erste Achse A1 um 180°, wie sie bei den in Fig. 1 bis 6 dargestellten Übergabeprozessen gewünscht ist, ebenfalls eine Drehung des zweiten Segments 31 um die zweite Achse A2 um 180° mit sich. Somit führen das zweite Segment 31 und die an der Saugvorrichtung 34 gehaltenen Blisterpackungen 4 eine Drehbewegung um die zweite Achse A2 von im Wesentlichen 180° aus, wenn sich der Saugerarm 24 von seiner Aufnahmestellung zu seiner Abgabestellung oder umgekehrt bewegt. Wenn die Saugvorrichtung 34 in der Aufnahmestellung und der Abgabestellung schräg nach unten abragt, kann das erste Segment 30 bei der Schwenkbewegung um die erste Achse A1 auch nur einen Winkelbereich von weniger als 180°, bis hin zu 120°, überstreichen. In diesem Fall müsste die Übersetzung zwischen den Kegelrädern 56, 60 entsprechend angepasst werden, weil das zweite Segment 31 in jedem Fall eine Drehbewegung um die zweite Achse A2 um 180° vollziehen muss.

Die Drehbewegung des zweiten Segments 31 um die zweite Achse A2 in Kombination mit der Schwenkbewegung um die erste Achse A1 bewirkt, dass die Blisterpackungen 4 von den Saugköpfen 36 an einer Seite, vorzugsweise an der ebenen Fläche der Deckfolienseite, ergriffen und anschließend von oben in die Endablagepositionen 26 abgelegt werden können. Dabei vollziehen die Blisterpackungen 4 eine 180°-Drehung um ihre Mittelpunkte.

Abweichend vom bisher dargestellten Grundprinzip ist es gewünscht, dass das zweite Segment 31 in den Endbereichen der Schwenkbewegung um die erste Achse A1 keine Drehbewegung um die zweite Achse A2 vollzieht. Dies ist darin begründet, dass für ein gezieltes Aufnehmen und Ablegen der Blisterpackungen 4 ein geradliniges Anheben und Absenken der Blisterpackungen 4 in den Endbereichen der Bewegung vorteilhaft ist. Zur Erreichung dieses Zwecks kann in der zweiten Übergabeeinheit 14 ein Mechanismus 64 zur Anpassung des Drehverlaufs des zweiten Segments 31 um die zweite Achse A2 vorgesehen sein.

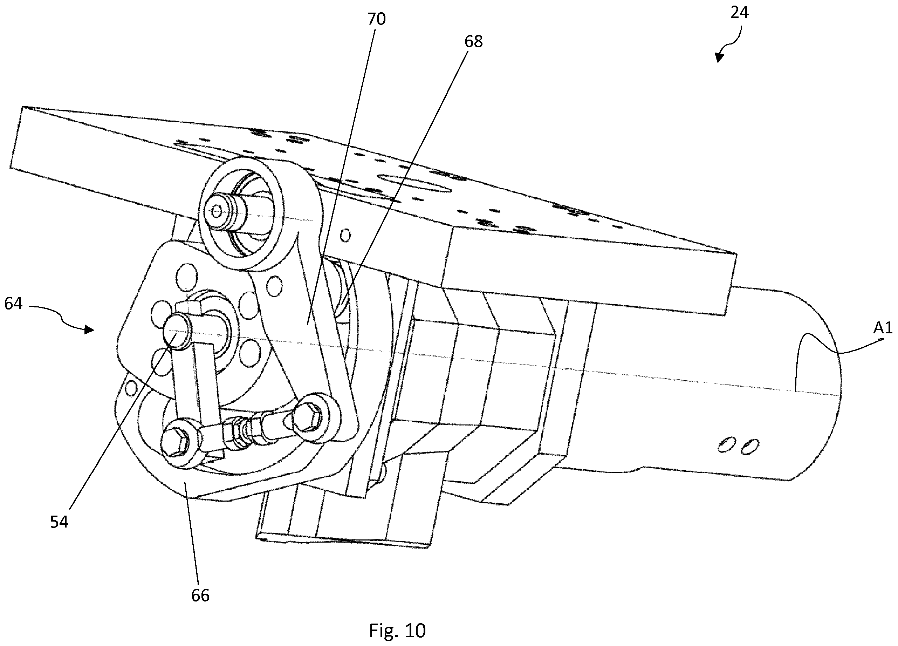

Dieser Mechanismus 64 wird nun unter Bezugnahme auf Fig. 10 näher beschrieben. In Fig. 10 ist das Ende des ersten Segments 30, an dem das zweite Segment 31 sowie die Saugvorrichtung 34 befestigt sind, aus Zwecken der Übersichtlichkeit nicht dargestellt. Der Mechanismus 64 umfasst eine Kurvenscheibe 66, die gemeinsam mit dem ersten Segment 30 um die erste Achse A1 gedreht wird. In der Querschnittsansicht in Fig. 9 ist diese Kurvenscheibe 66 ebenfalls gezeigt, allerdings ohne die weiteren Komponenten des Mechanismus 64.

Wieder Bezug nehmend auf Fig. 10 umfasst der Mechanismus 64 des Weiteren eine Kurvenrolle 68, die drehbar an einem Hebelmechanismus 70 angelenkt ist. Der Hebelmechanismus 70 wiederum ist mit der inneren Welle 54 starr verbunden, an deren anderem Ende das Kegelrad 56 angeordnet ist. Bei Drehung der Kurvenscheibe 66 um die erste Achse A1 läuft die Kurvenrolle 68 an der Kurvenscheibe 66 ab und bewirkt somit eine entsprechende Auslenkung des Hebelmechanismus 70, was wiederum zu einer Drehung der Welle 54 um die erste Achse A1 führt. Der Mechanismus 64 ist so gestaltet, dass sich die Welle 54 und somit das Kegelrad 56 in den Anfangs- und Endbereichen der Drehbewegung des ersten Segments 30 und somit der Kurvenscheibe 66 um die erste Achse A1 mit derselben Winkelgeschwindigkeit wie das erste Segment 30 mitbewegen. Auf diese Weise erfolgt zwischen Kegelrad 56 und Kegelrad 60 keine Relativbewegung, sodass auch keine Drehbewegung des zweiten Segments 31 um die zweite Achse A2 initiiert wird.

Im weiteren Verlauf der Schwenkbewegung um die erste Achse A1 hingegen wird durch den Mechanismus 64 eine gegenläufige Bewegung der Welle 54 entgegen der Drehrichtung des ersten Segments 30 bewirkt, wodurch die Drehgeschwindigkeit des zweiten Segments 31 um die zweite Achse A2 bereichsweise schneller ist als die Drehbewegung um die erste Achse A1. Auf diese Weise gelingt es, an den Endpunkten der Schwenkbewegung um die erste Achse A1 die Drehbewegung des zweiten Segments 31 um die zweite Achse A2 auszusetzen und dies in einem Mittelbereich der Schwenkbewegung um die erste Achse A1 durch schnellere Drehung des zweiten Segments 31 um die zweite Achse A2 wieder auszugleichen. Dadurch wird gewährleistet, dass die Blisterpackungen 4 immer eine Drehbewegung um die zweite Achse A2 um 180° vollziehen.

Selbstverständlich existieren vielfältige Modifikationen der bislang beschriebenen Struktur des Saugerarms 24 und des zugehörigen Antriebs. So kann beispielsweise die Kopplung zwischen der Schwenkbewegung des ersten Segments 30 um die erste Achse A1 und der Drehbewegung des zweiten Segments 31 um die zweite Achse A2 auch mittels anderer mechanischer Komponenten gelöst werden. Außerdem ist es denkbar, zwei separate Servomotoren für den Antrieb des ersten Segments 30 und des zweiten Segments 31 vorzusehen.

Der Aufbau des Saugerarms 25 ist im Wesentlichen spiegelsymmetrisch zum Saugerarm 24, wobei das erste Segment mit 32, das zweite Segment mit 33 und die zweite Achse mit A2' bezeichnet sind.

Bezugnehmend auf Fig. 1 bis 6 soll nun der Ablauf eines Übergabeprozesses mit der beschriebenen Vorrichtung 2 näher erläutert werden. Die Blisterpackungen 4, 6 werden an den Bereitstellpositionen 20 in der Stanzstation 10 durch den ersten und zweiten Saugerarm 18, 19 der ersten Übergabeeinheit 8 aufgenommen, zu den Zwischenablagepositionen 22 bewegt und dort abgelegt. Die Blisterpackungen 4, 6 werden in den Bereitstellpositionen 20 vorzugsweise von der ersten Übergabeeinheit 8 von oben aufgenommen und ebenfalls von oben in den Zwischenablagepositionen 22 auf die Zwischenablage 12 abgelegt.

Aufgrund der kombinierten Drehbewegungen um die zwei zueinander senkrechten Achsen werden die Blisterpackungen 4, 6, die in den Bereitstellpositionen 20 in einer Querreihe angeordnet sind, in den Zwischenablagepositionen 22 im Vergleich zu den Bereitstellpositionen 20 mit derselben Seite nach oben, aber um 180° um ihre Mittelpunkte gedreht abgelegt. Gegebenenfalls ist es auch möglich, dass die Blisterpackungen 4, 6 nicht in einer horizontalen Ausrichtung an den Bereitstellpositionen 20 liegen, sondern beispielsweise in einer senkrechten Ausrichtung oder unter einem schrägen Winkel zur Vertikalen bereitgestellt werden. In diesem Fall vollziehen die Saugerarme 18, 19 eine Schwenkbewegung um die erste Achse lediglich über einen Winkel, der kleiner als 180° ist, in der Regel zwischen 60° und 180°.

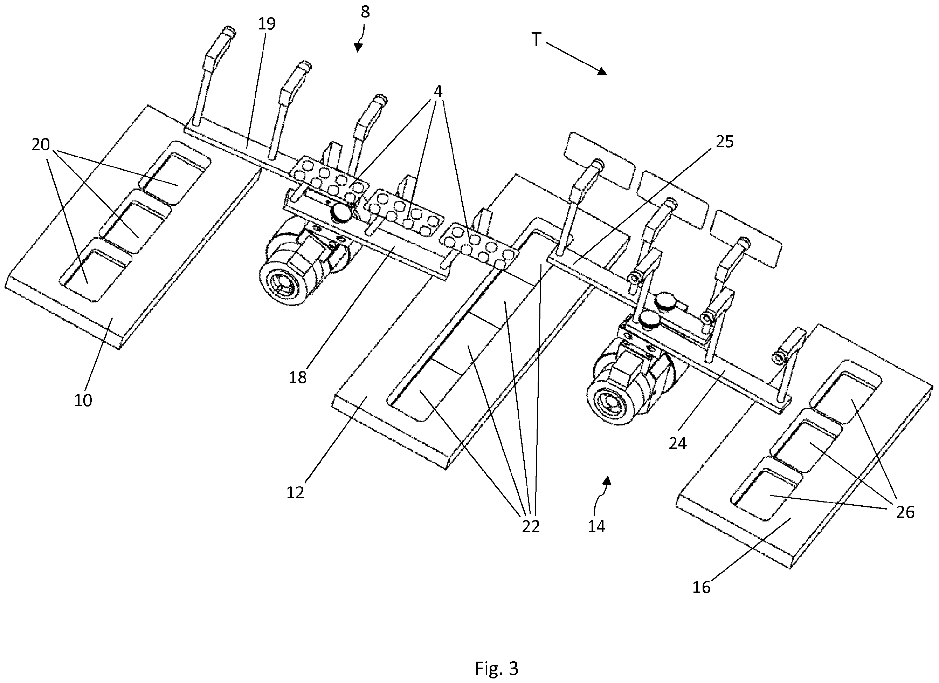

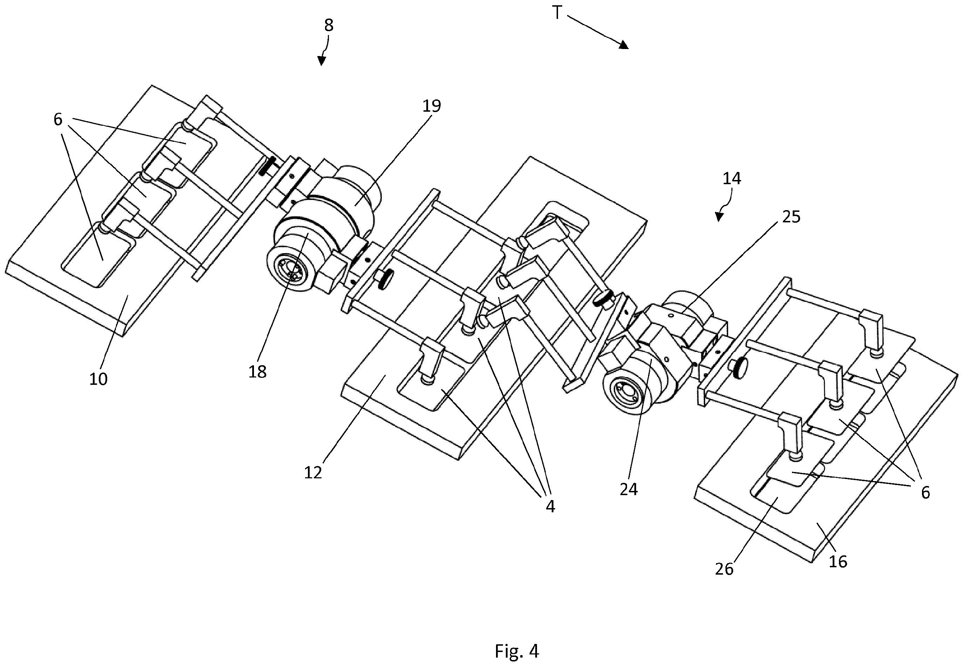

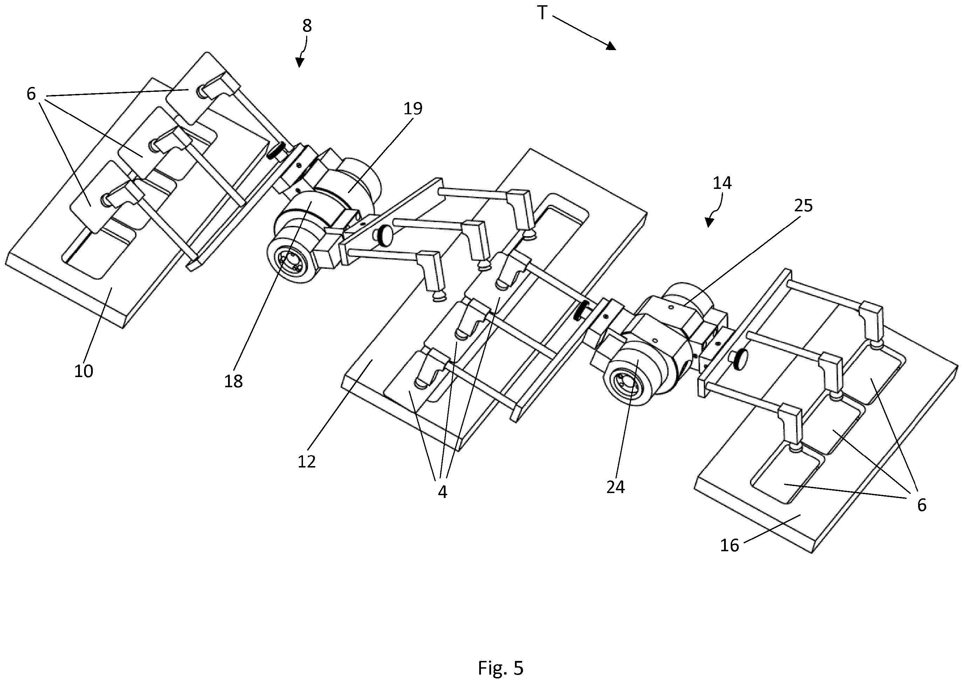

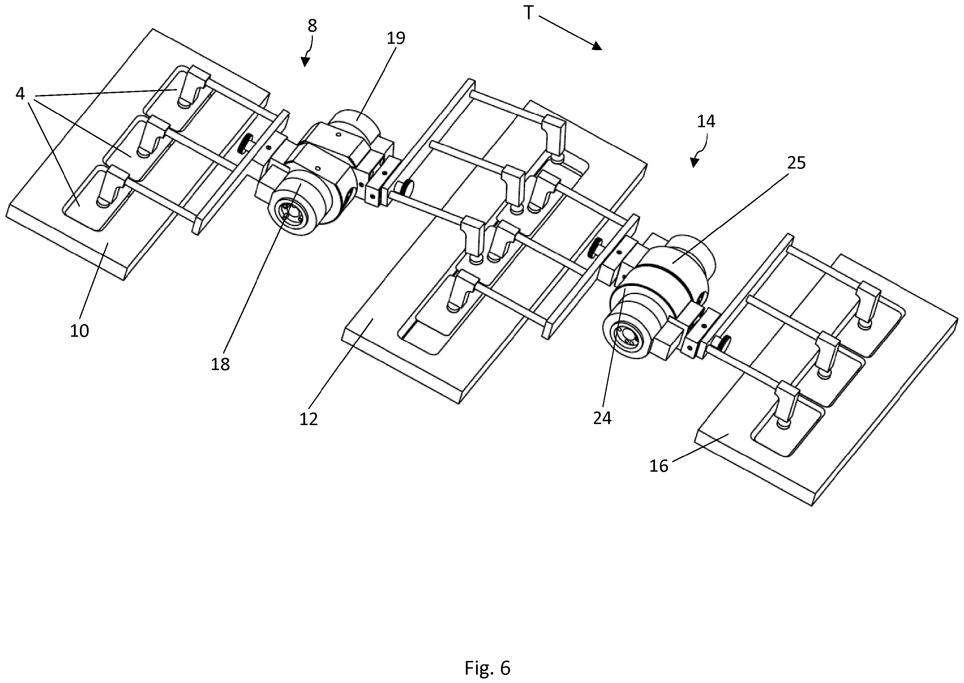

Fig. 1 zeigt die Blisterpackungen 4 unmittelbar nach Verlassen der Bereitstellpositionen 20. In Fig. 3 befinden sich die Blisterpackungen 4 auf dem Weg von den Bereitstellpositionen 20 zu den Zwischenablagepositionen 22, wo sie in Fig. 4 abgelegt werden. In Fig. 5 befindet sich der erste Saugerarm 18 auf dem Weg zurück zu seiner Aufnahmestellung. Der zweite Saugerarm 19 vollzieht währenddessen eine gegenläufige Bewegung. In Fig. 6 beginnt der Übergabezyklus wieder von vorne.

Wie zuvor bereits erläutert wurde, könnte anstelle der beiden gegensinnig bewegten Saugerarme 18, 19 auch ein einziger Saugerarm für die Übergabe der Blisterpackungen 4, 6 von der Stanzstation 10 zur Zwischenablage 12 verwendet werden.

Sobald die Blisterpackungen 4 in den Zwischenablagepositionen 22 des Zwischenablagepositionsbereichs 23 bereitliegen, können die ersten Blisterpackungen 4 dort von dem ersten Saugerarm 24 der zweiten Übergabeeinheit 14 ergriffen und zu den Endablagepositionen 26 transferiert werden. Die ersten Blisterpackungen 4 werden in den Zwischenablagepositionen 22 von oben aufgenommen und ebenfalls von oben in den Endablagepositionen 26 auf das Fördermittel 16 abgelegt. Die ersten Blisterpackungen 4 werden in den Endablagepositionen 26 im Vergleich zu den Zwischenablagepositionen 22 mit derselben Seite nach oben, aber um 180° um ihre Mittelpunkte gedreht abgelegt.

Für die Übergabe der zweiten Blisterpackungen 6 aus den Zwischenablagepositionen 22 des Zwischenablagepositionsbereichs 23' hin zu den gemeinsamen Endablagepositionen 26 mittels des zweiten Saugerarms 25 gelten exakt dieselben Aussagen wie für die Übergabe der ersten Blisterpackungen 4 mittels des ersten Saugerarms 24. Lediglich die Zeitpunkte des Aufnehmens der Blisterpackungen 6 und des Ablegens der Blisterpackungen 6 sind im Wesentlichen gegenläufig zu den Zeitpunkten, an denen die ersten Blisterpackungen 4 aufgenommen und abgelegt werden.

Fig. 1 zeigt die zweiten Blisterpackungen 6 kurz nach deren Ergreifen an den Zwischenablagepositionen 22. In Fig. 3 befinden sich die Blisterpackungen 6 auf dem Weg von den Zwischenablagepositionen 22 zu den Endablagepositionen 26, wo sie kurz nach dem in Fig. 4 dargestellten Zeitpunkt abgelegt werden. In Fig. 5 ist der zweite Saugerarm 25 kurz nach dem Ablegevorgang dargestellt, während er sich bereits wieder auf dem Rückweg in seine Aufnahmestellung befindet. Der erste Saugerarm 24 vollzieht währenddessen eine gegenläufige Bewegung. In Fig. 6 beginnt der Zyklus wieder von vorne. Der Vorgang wird so oft wiederholt wie gewünscht.

Die beiden Saugerarme 24, 25 vollziehen eine Schwenkbewegung um dieselbe erste Achse A1, während die Drehbewegungen ihrer zweiten Segmente 31, 33 um die jeweilige zweite Achse A2, A2' zueinander entgegengesetzte Drehrichtungen zeigen. An einem Scheitelpunkt der Drehbewegung, wie sie im Querschnitt in Fig. 9 dargestellt ist, sind die Blisterpackungen vorzugsweise parallel zur Längsmittelebene der Übergabeeinheit 14 angeordnet (siehe auch Fig. 3).

Die Zeitpunkte des Aufnehmens der Blisterpackungen 4, 6 von den Zwischenablagepositionen 22 müssen mit den Zeitpunkten des Ablegens der Blisterpackungen 4, 6 auf den Zwischenablagepositionen 22 durch die erste Übergabeeinheit 8 koordiniert sein. Um den Durchsatz zu erhöhen, kann es sinnvoll sein, dass der entsprechende Saugerarm 24, 25 der zweiten Übergabeeinheit 14 die entsprechenden Blisterpackungen 4, 6 bereits an den Zwischenablagepositionen 22 aufnimmt, während der entsprechende Saugerarm 18, 19 der ersten Übergabeeinheit 24 sich noch im Bereich der Zwischenablagepositionen 22 befindet. Für einen solchen Fall ist es notwendig, dass die Saugerarme 18, 19, 24, 25 eine Geometrie aufweisen, die es ermöglicht, dass die Saugvorrichtungen 34 der Saugerarme 18, 19, 24, 25 im Bereich der Zwischenablagepositionen 22 versetzt zueinander sind, siehe Fig. 6.

Der Aufbau und Antrieb der Saugerarme 18, 19 der ersten Übergabeeinheit 8 ist vorzugsweise im Wesentlichen identisch zur Struktur und zum Antrieb der Saugerarme 24, 25 der zweiten Übergabeeinheit 14, wie sie oben detailliert beschrieben wurden.

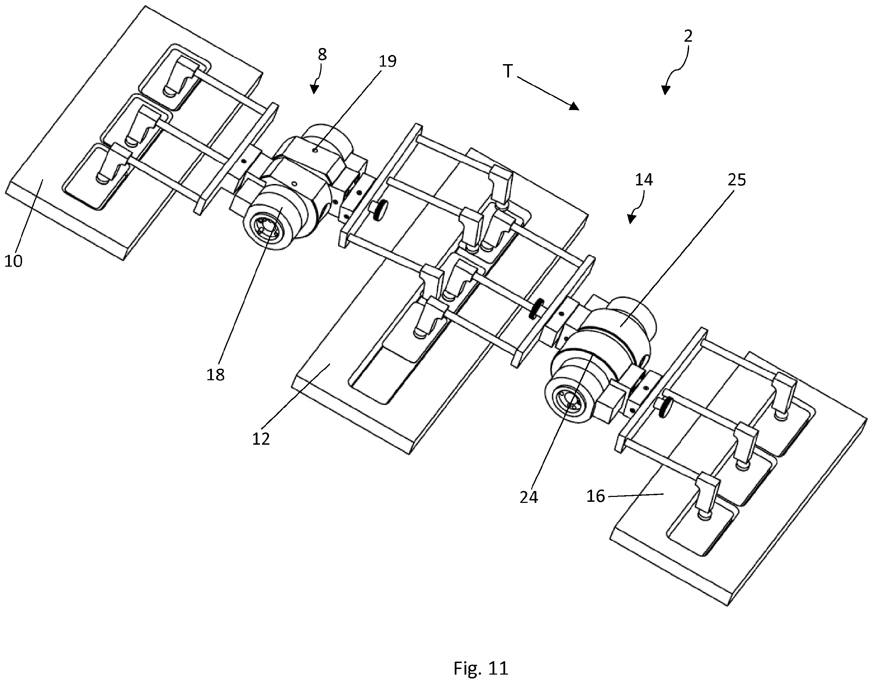

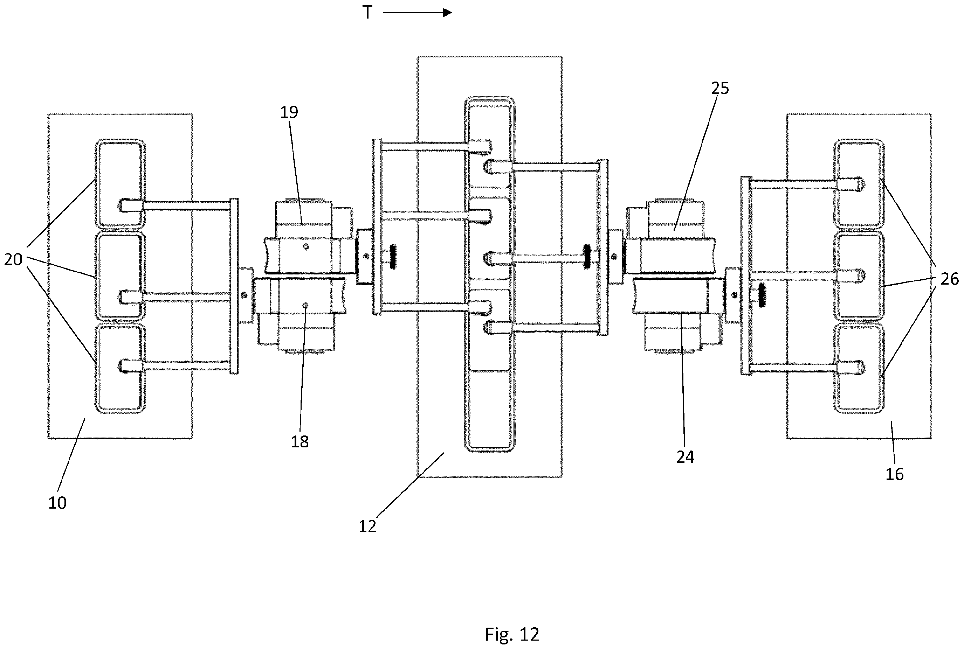

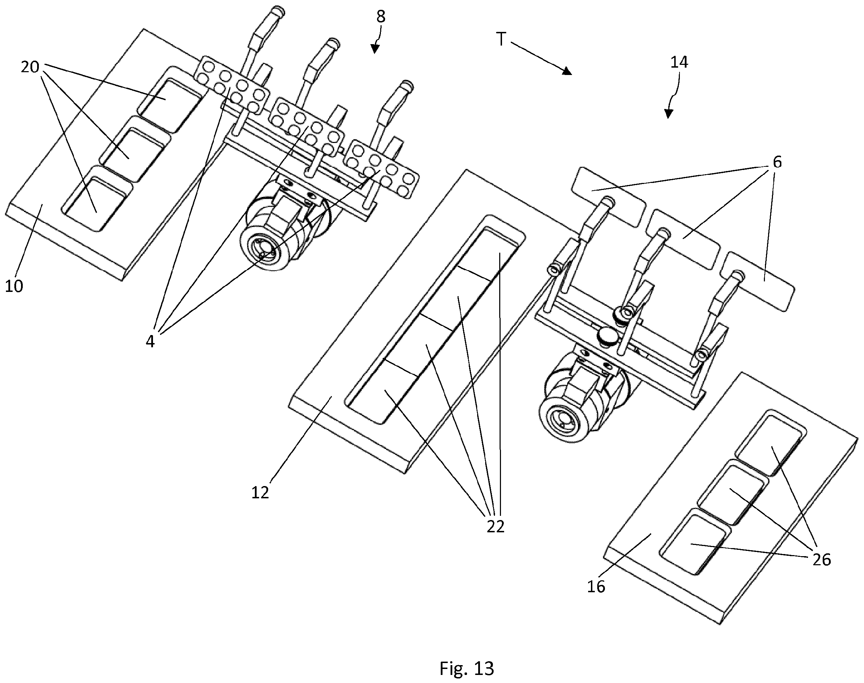

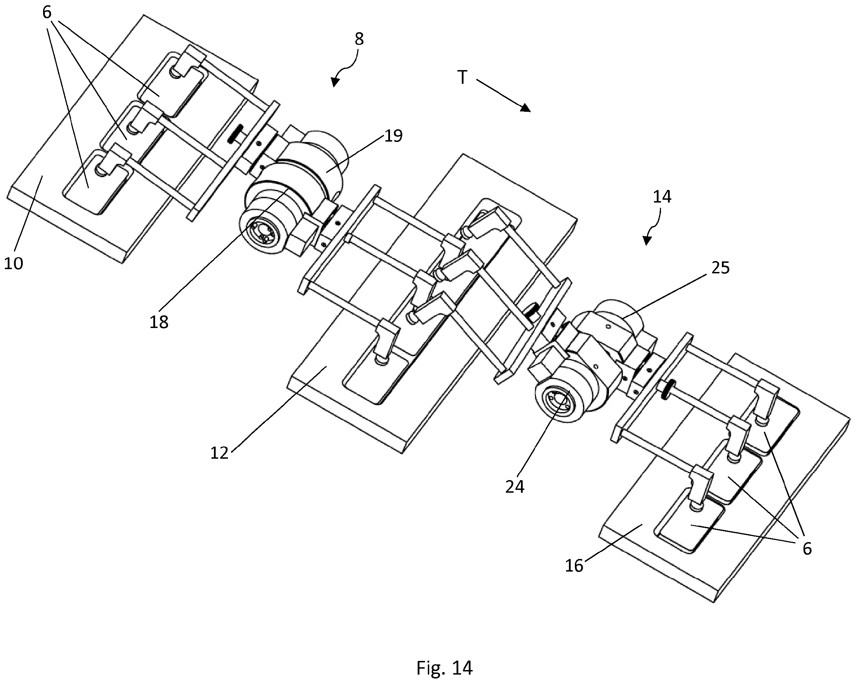

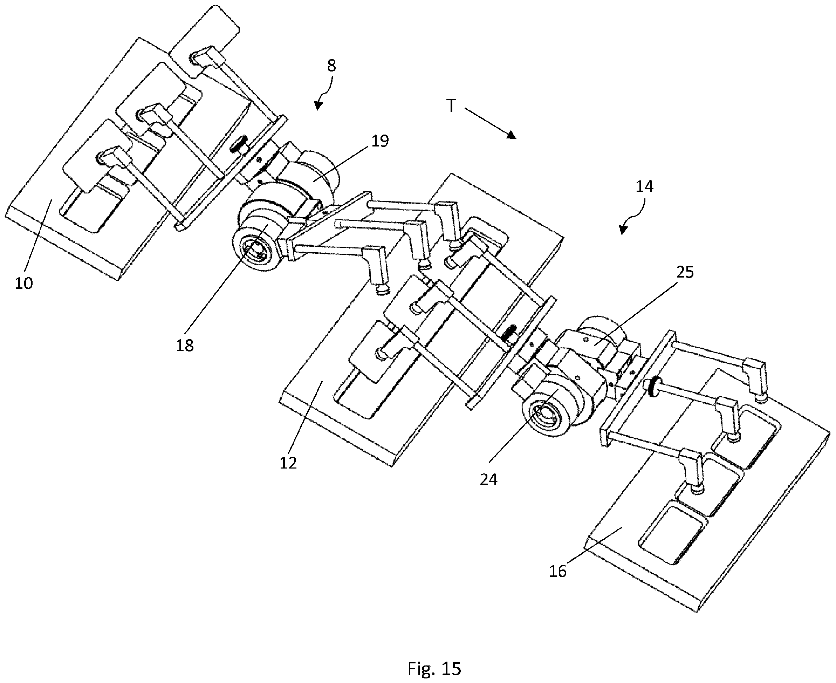

Die Ausführungsform gemäß Fig. 11 bis 15 unterscheidet sich von der zuvor beschriebenen Ausführungsform darin, dass die Blisterpackungen 4, 6 auf dem Weg von der Stanzstation 10 zur Zwischenablage 12 einen seitlichen Versatz quer zur Transferrichtung T vollziehen, dieser seitliche Versatz jedoch beim ersten Saugerarm 18 nach links außen versetzt und beim zweiten Saugerarm 19 nach rechts außen versetzt ist. Ebenso ist es unterschiedlich, dass dieser seitliche Versatz bei der Übergabe der Blisterpackungen 4, 6 von der Zwischenablage 12 zum Fördermittel 16 jeweils wieder rückgängig gemacht wird. Wie aus Fig. 12 ersichtlich ist, liegen die Bereitstellpositionen 20 der Blisterpackungen 4, 6 in der Stanzstation 10 in Transferrichtung T auf einer Linie mit den Endablagepositionen 26 auf dem Fördermittel 16.

Die unterschiedlichen seitlichen Versätze der Blisterpackungen 4, 6 im Vergleich zum stufenweisen Versatz der Blisterpackungen 4, 6 in der Ausführungsform gemäß Fig. 1 bis 10 wird durch die Anordnung der zweiten Drehachsen A2, A2' der zweiten Segmente 31, 33 der jeweiligen Saugerarme 18, 19, 24, 25 relativ zur Mitte des Bereitstellpositionsbereichs 21 bzw. des Zwischenablagepositionsbereichs 23, 23' bzw. des Endablagepositionsbereichs 27 erzielt. Ansonsten ist der Aufbau der Saugerarme 18, 19, 24, 25 vorzugsweise identisch wie zu Fig. 1 bis 10 beschrieben.

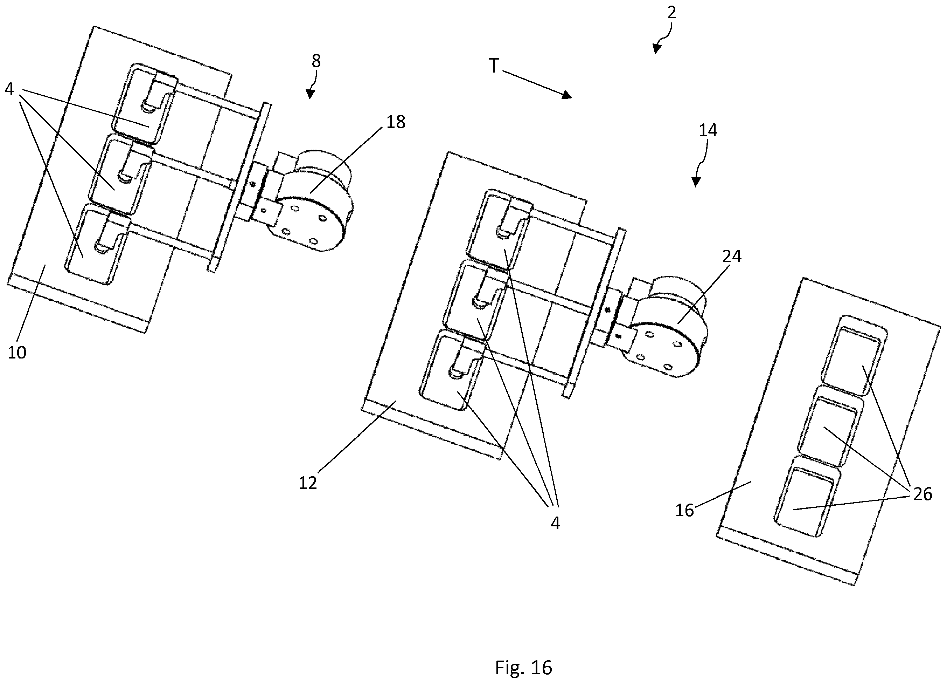

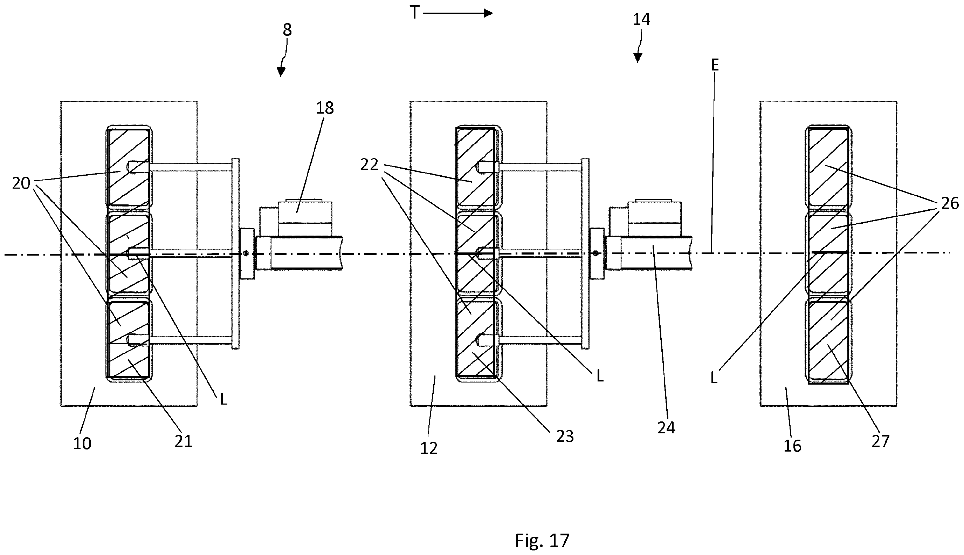

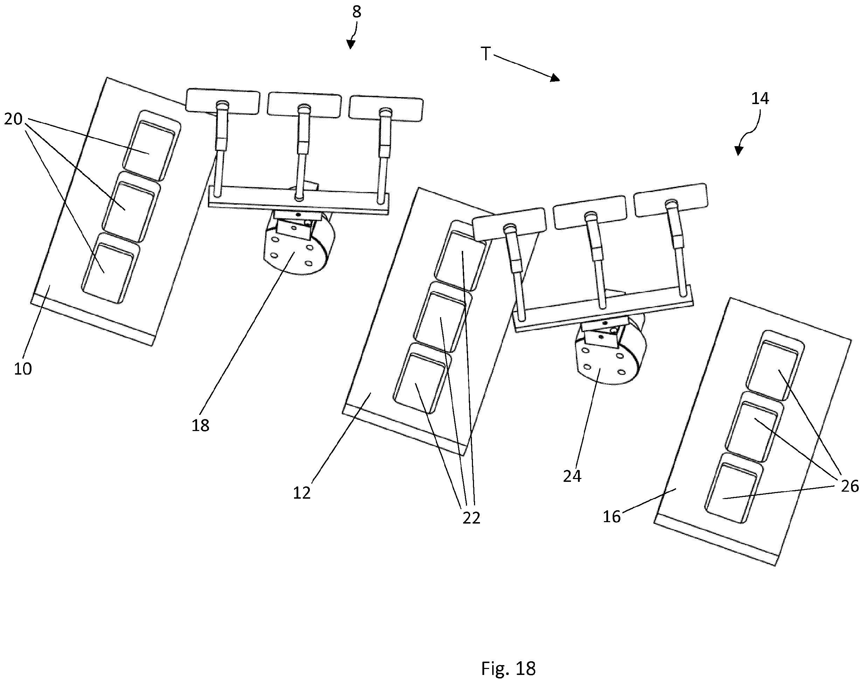

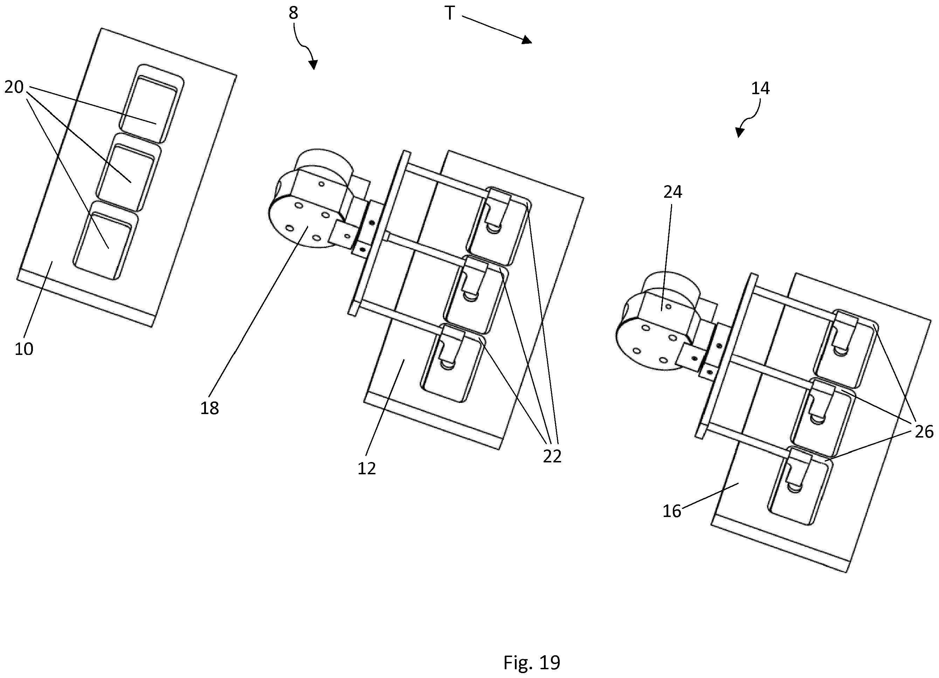

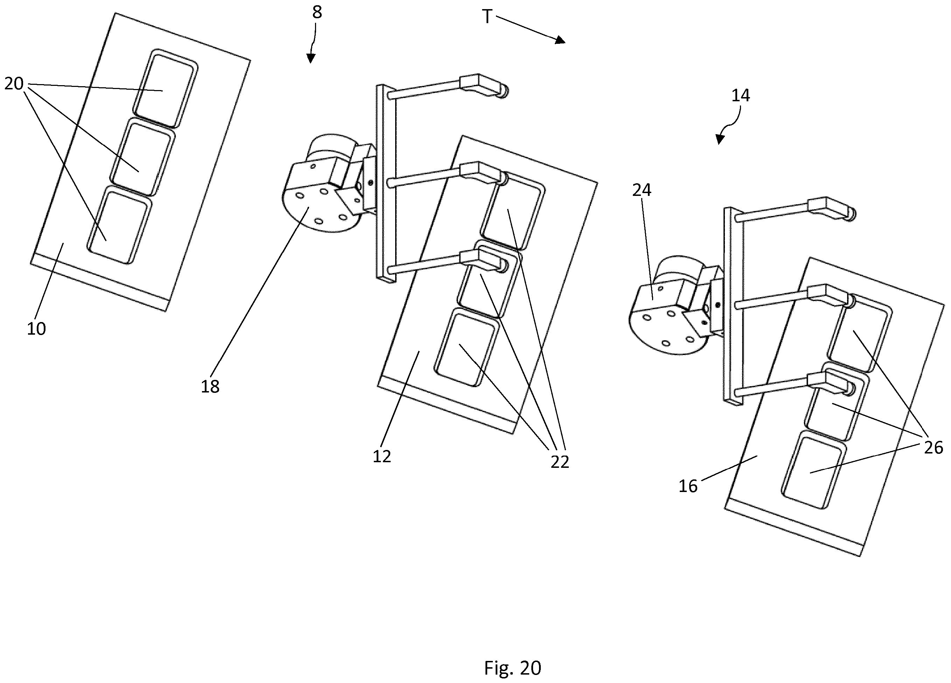

In der Ausführungsform gemäß Fig. 16 bis 20 erfolgt die Übergabe sowohl in der ersten Übergabeeinheit 8 als auch in der zweiten Übergabeeinheit 14 lediglich mittels eines Saugerarms 18 bzw. 24. Schließlich schneidet die Ebene E, in denen sich die zweiten Achsen A2 der Saugerarme 18, 24 bewegen, den Bereitstellpositionsbereich 21, den Zwischenablagepositionsbereich 23 und den Endablagepositionsbereich 27 in geraden Linien L, die mittig bezüglich der oben genannten Bereiche sind. Auf diese Weise entfällt der seitliche Versatz der Blisterpackungen 4 während der Übergabe. Aufbau und Antrieb der Saugerarme 18, 24 ist ansonsten wiederum vorzugsweise identisch wie zu Fig. 1 bis 10 beschrieben.

Wie oben bereits erwähnt, erfolgt bei allen Ausführungsformen das Aufnehmen der Blisterpackungen 4, 6 in den Bereitstellpositionen 20 bevorzugt von oben. Gegebenenfalls ist es auch möglich, dass die Blisterpackungen 4, 6 nicht in einer horizontalen Ausrichtung an den Bereitstellpositionen 20 liegen, sondern beispielsweise in einer senkrechten Ausrichtung oder unter einem schrägen Winkel zur Vertikalen bereitgestellt werden. In diesem Fall vollziehen die Saugerarme 18, 19 eine Schwenkbewegung um die erste Achse A1 lediglich über einen Winkel, der kleiner als 180° ist, in der Regel zwischen 60° und 180°. Die Übersetzung zwischen den Kegelrädern 56, 60 ist dann entsprechend anzupassen, um sicherzustellen, dass das zweite Segment 31, 33 während dieser reduzierten Schwenkbewegung um die erste Achse A1 eine vollständige 180°-Drehung um die zweite Achse A2, A2' vollzieht.

An den Bereitstellpositionen 20 werden die Blisterpackungen 4, 6 allgemein jeweils bevorzugt mittels einer geeigneten Halterung festgehalten, bis sie von den Saugerarmen 18, 19 ergriffen wurden. Die Halterung muss die Blisterpackungen 4, 6 rechtzeitig vor der Transferbewegung freigeben.

An den Zwischenablagepositionen 22 werden die Blisterpackungen 4, 6 allgemein jeweils bevorzugt mittels einer geeigneten Halterung festgehalten, bis sie von den Saugerarmen 24, 25 ergriffen wurden. Die Halterung muss die Blisterpackungen 4, 6 rechtzeitig vor der Transferbewegung freigeben.

In den oben beschriebenen Ausführungsformen der Fig. 1 bis 15 wurden jeweils zwei Sauggreifer 18, 19 bzw. 24, 25 pro Übergabeeinheit 8, 14 beschrieben. es ist aber auch denkbar, in einer oder beiden Übergabeeinheiten 8, 14 nur einen der beschriebenen Sauggreifer zu verwenden.

In der Ausführungsform der Fig. 16 bis 20 erfolgt kein seitlicher Versatz der Blisterpackungen 4 während der Übergabe. Der Bereitstellpositionsbereich 21, der Zwischenablagepositionsbereich 23, 23' und der Endablagepositionsbereich 27 liegen auf einer Linie. Hingegen erfolgt bei den Ausführungsformen der Fig. 1 bis 15 ein seitlicher Versatz der Blisterpackungen während der Übergabe. Der Bereitstellpositionsbereich 21 und der Zwischenablagepositionsbereich 23, 23' liegen nicht auf einer Linie, und/oder der Zwischenablagepositionsbereich 23, 23' und der Endablagepositionsbereich 27 liegen nicht auf einer Linie.

Es ist auch möglich, eine Übergabeeinheit 8, 14 gemäß Fig. 1 bis 15 mit einer Übergabeeinheit 8, 14 gemäß Fig. 16 bis 20 zu kombinieren, d.h. eine Übergabeeinheit mit seitlichem Versatz und eine Übergabeeinheit ohne seitlichen Versatz. Es ist auch möglich, nur einen Saugerarm 18, 19, 24, 25 aus einer der Ausführungsformen gemäß Fig. 1 bis 15 mit einer Übergabeeinheit 8, 14 gemäß Fig. 16 bis 20 zu kombinieren.

Ebenso wäre es möglich, eine der Übergabeeinheiten 8, 14 aus Fig. 1 bis 10 mit einer der Übergabeeinheiten 8, 14 gemäß Fig. 11 bis 15 zu kombinieren, nur einen Saugerarm aus einer der Übergabeeinheiten 8, 14 aus Fig. 1 bis 10 mit einer der Übergabeeinheiten 8, 14 gemäß Fig. 11 bis 15 zu kombinieren, oder eine der Übergabeeinheiten 8, 14 aus Fig. 11 bis 15 mit nur einen Saugerarm aus einer der Übergabeeinheiten 8, 14 gemäß Fig. 1 bis 10 zu kombinieren.

In den dargestellten Ausführungsbeispielen werden jeweils drei Blisterpackungen 4, 6 gleichzeitig mittels eines Saugerarms übergeben. Es können aber auch nur zwei oder mehr als drei Blisterpackungen 4, 6 gleichzeitig übergeben werden.

Die Blisterpackungen 4, 6 enthalten in der Regel Tabletten, Kapseln oder Dragees. Die Blisterpackungen 4, 6 sind meist mit einer ebenen Deckfolie verschlossen, an der die Saugköpfe 36 angreifen können. Es ist aber auch denkbar, dass die Blisterpackungen 4, 6 nach oben offen bleiben. Dies ist besonders dann möglich, wenn nicht Tabletten, sondern andere medizinische Produkte wie Spritzen, Ampullen, Vials oder dergleichen verpackt wurden. Bei einer Blisterverpackung 4, 6 ohne Deckfolie ist es vorteilhaft, wenn die Saugköpfe 36 an die Form der Produkte angepasst werden und direkt an den in den Blisternäpfen fixierten Produkten angreifen. Die Blisterpackungen 4, 6 können auch nichtmedizinische Produkte enthalten.

## Patentansprüche

1. Vorrichtung (2) zum Transferieren von Blisterpackungen (4, 6) mit einer ersten Übergabeeinheit (8) zur Übergabe der Blisterpackungen (4, 6) von einer Stanzstation (10), einem Transportmittel oder einem Zwischenspeicher zu einer Zwischenablage (12) und mit einer zweiten Übergabeeinheit (14) zur Übergabe der Blisterpackungen (4, 6) von der Zwischenablage (12) auf ein Fördermittel (16) oder in einen Speicher,
wobei die zweite Übergabeeinheit (14) einen Saugerarm (24, 25) aufweist, der bewegbar ist zwischen einer Aufnahmestellung zum Aufnehmen mehrerer Blisterpackungen (4, 6) von mehreren Zwischenablagepositionen (22) auf der Zwischenablage (12) und einer Abgabestellung zum Ablegen der mehreren Blisterpackungen (4, 6) in mehreren Endablagepositionen (26) auf dem Fördermittel (16) oder in dem Speicher,
wobei der Saugerarm (24, 25) ein erstes Segment (30, 32) und ein zweites Segment (31, 33) aufweist, wobei das erste Segment (30, 32) des Saugerarms (24, 25) um eine zugehörige erste Achse (A1) drehbar befestigt ist,
wobei das erste Segment (30, 32) des Saugerarms (24, 25) einen Abschnitt aufweist, an dem das zweite Segment (31, 33) drehbar um eine zur ersten Achse (A1) im Wesentlichen senkrecht verlaufende ortsveränderliche zweite Achse (A2, A2') befestigt ist, wobei an dem zweiten Segment (31, 33) eine Saugvorrichtung (34) zum Ansaugen und Halten der Blisterpackungen (4, 6) angeordnet ist,
wobei der Saugerarm (24, 25) derart ausgestaltet und angesteuert ist, dass die Bewegung des Saugerarms (24, 25) von der Aufnahmestellung zur Abgabestellung und zurück eine kombinierte Bewegung ist, die sich zumindest aus einer ersten Drehbewegung des ersten Segments (30, 32) und des zweiten Segments (31, 33) um die erste Achse (A1) und einer zweiten Drehbewegung des zweiten Segments (31, 33) um die zweite Achse (A2, A2') zusammensetzt,
wobei der Saugerarm (24, 25) derart ausgestaltet und angesteuert ist, dass die Blisterpackungen (4, 6) in den Zwischenablagepositionen (22) von der Saugvorrichtung (34) des Saugerarms (24, 25) gleichzeitig von oben aufgenommen und ebenfalls gleichzeitig von oben in die Endablagepositionen (26) abgelegt werden,
wobei die mehreren Zwischenablagepositionen (22) in einer Reihe parallel zur ersten Achse (A1) nebeneinander angeordnet sind und gemeinsam einen Zwischenablagepositionsbereich (23, 23') bilden, und wobei die mehreren Endablagepositionen (26) in einer Reihe parallel zur ersten Achse (A1) nebeneinander angeordnet sind und gemeinsam einen Endablagepositionsbereich (27) bilden.

2. Vorrichtung (2) nach Anspruch 1, **dadurch gekennzeichnet, dass** die zweite Achse (A2) des Saugerarms (24) derart angeordnet ist, dass sie sich während der ersten Drehbewegung des ersten Segments (30) des Saugerarms (24) in einer Ebene (E) bewegt, die den Zwischenablagepositionsbereich (23) und den Endablagepositionsbereich (27) jeweils in einer geraden Linie (L) schneidet, wobei die Linien (L) im Bereich einer Mitte des Zwischenablagepositionsbereichs (23) und einer Mitte des Endablagepositionsbereichs (27) angeordnet sind.

3. Vorrichtung (2) nach Anspruch 1, **dadurch gekennzeichnet, dass** die zweite Achse (A2, A2') des Saugerarms (24, 25) derart angeordnet ist, dass sie sich während der ersten Drehbewegung des ersten Segments (30, 32) des Saugerarms (24, 25) in einer Ebene (E1, E2) bewegt, die den Zwischenablagepositionsbereich (23, 23') oder dessen seitliche Projektion in einer geraden Linie (L1, L2) schneidet, die seitlich versetzt zur Mitte (M1, M2) des Zwischenablagepositionsbereichs (23, 23') ist.

4. Vorrichtung (2) nach einem der vorhergehenden Ansprüche, **dadurch gekennzeichnet, dass** das zweite Segment (31, 33) und somit die an der Saugvorrichtung (34) gehaltenen Blisterpackungen (4, 6) eine Drehbewegung um die zweite Achse (A2, A2') von im Wesentlichen 180° ausführen, wenn sich der Saugerarm (24, 25) von der Aufnahmestellung zur Abgabestellung oder umgekehrt bewegt.

5. Vorrichtung (2) nach einem der vorhergehenden Ansprüche, **dadurch gekennzeichnet, dass** das erste Segment (30, 32) eine Drehbewegung um die erste Achse (A1) von 120° bis 180° ausführt, wenn sich der Saugerarm (24, 25) von der Aufnahmestellung zur Abgabestellung oder umgekehrt bewegt.

6. Vorrichtung (2) nach einem der vorhergehenden Ansprüche, **dadurch gekennzeichnet, dass** der Saugerarm (24, 25) parallel zur ersten Achse (A1) verschiebbar gelagert ist.

7. Vorrichtung (2) nach einem der vorhergehenden Ansprüche, **dadurch gekennzeichnet, dass** die Saugvorrichtung (34) mehrere Saugköpfe (36) umfasst, die mittels mindestens eines Trägerarms (38) am zweiten Segment (31, 33) befestigt sind.

8. Vorrichtung (2) nach Anspruch 7, **dadurch gekennzeichnet, dass** der mindestens eine Trägerarm (38) starr am zweiten Segment (31, 33) befestigt ist.

9. Vorrichtung (2) nach Anspruch 7 oder 8, **dadurch gekennzeichnet, dass** der mindestens eine Trägerarm (38) in der Aufnahmestellung und in der Abgabestellung vom zweiten Segment (31, 33) schräg nach unten abragt.

10. Verfahren zum Transferieren von Blisterpackungen (4, 6) von einer Stanzstation (10), einem Transportmittel oder einem Zwischenspeicher zu einer Zwischenablage (12) und von der Zwischenablage (12) zu einem Fördermittel (16) oder zu einem Speicher mittels einer Vorrichtung, mit folgenden Schritten:
- Übergeben mehrerer Blisterpackungen (4, 6) von der Stanzstation (10), dem Transportmittel oder dem Zwischenspeicher zu der Zwischenablage (12), wobei die Blisterpackungen (4, 6) auf der Zwischenablage (12) in einer Reihe nebeneinander in mehreren Zwischenablagepositionen (22) abgelegt werden;
- Aufnehmen der mehreren Blisterpackungen (4, 6) in den mehreren Zwischenablagepositionen (22) von der Zwischenablage (12), Bewegen der Blisterpackungen (4, 6) und Ablegen der Blisterpackungen (4, 6) in mehreren Endablagepositionen (26) auf dem Fördermittel (16) oder in dem Speicher, wobei die Blisterpackungen (4, 6) in den Endablagepositionen (26) in einer Reihe nebeneinander, die parallel zur Reihe der Blisterpackungen (4, 6) in den Zwischenablagepositionen (22) ist, angeordnet sind;
wobei die Blisterpackungen (4, 6) in den Zwischenablagepositionen (22) gleichzeitig von oben aufgenommen und ebenfalls gleichzeitig von oben in den Endablagepositionen (26) auf dem Fördermittel (16) oder in dem Speicher abgelegt werden, und wobei die Blisterpackungen (4, 6) in den Endablagepositionen (26) im Vergleich zu den Zwischenablagepositionen (22) mit derselben Seite nach oben, aber um 180° um ihre Mittelpunkte gedreht abgelegt werden, und
wobei das Verfahren mit einer Vorrichtung (2) zum Transferieren von Blisterpackungen (4, 6) nach einem der Ansprüche 1 bis 9 durchgeführt wird.

11. Verfahren nach Anspruch 10, **dadurch gekennzeichnet, dass** das Aufnehmen, Bewegen und Ablegen der Blisterpackungen (4, 6) von der Zwischenablage (12) auf das Fördermittel (16) oder in den Speicher mittels eines Saugerarms (24, 25) durchgeführt wird, der eine hin- und hergehende Schwenkbewegung ausführt.

12. Verfahren nach Anspruch 10 oder 11, **dadurch gekennzeichnet, dass** bei einer geradzahligen Anzahl von Blisterpackungen (4, 6) alle Blisterpackungen (4, 6) in den Endablagepositionen (26) im Vergleich zu den Zwischenablagepositionen (22) an vertauschten Positionen abgelegt werden; oder dass bei einer ungeradzahligen Anzahl von Blisterpackungen (4, 6) alle Blisterpackungen (4, 6) bis auf eine mittlere Blisterpackung (4, 6) in den Endablagepositionen (26) im Vergleich zu den Zwischenablagepositionen (22) an vertauschten Positionen abgelegt werden.

13. Verfahren nach einem der Ansprüche 10 bis 12, **dadurch gekennzeichnet, dass** das Übergeben der Blisterpackungen (4, 6) von der Stanzstation (10), dem Transportmittel oder dem Zwischenspeicher zu der Zwischenablage (12) folgende Schritte umfasst:
Aufnehmen der mehreren Blisterpackungen (4, 6) in mehreren Bereitstellpositionen (20) von der Stanzstation (10), dem Transportmittel oder dem Zwischenspeicher, Bewegen der Blisterpackungen (4, 6) und Ablegen der Blisterpackungen (4, 6) in den Zwischenablagepositionen (22) auf der Zwischenablage (12), wobei die Blisterpackungen (4, 6) von oben in den Zwischenablagepositionen (22) auf die Zwischenablage (12) abgelegt werden.

14. Verfahren nach Anspruch 13, **dadurch gekennzeichnet, dass** die Blisterpackungen (4, 6) in den Bereitstellpositionen (20) in einer Reihe nebeneinander, parallel zu den Reihen der Blisterpackungen (4, 6) in den Zwischenablagepositionen (22) und den Endablagepositionen (26), angeordnet sind, und dass die Blisterpackungen (4, 6) in den Zwischenablagepositionen (22) im Vergleich zu den Bereitstellpositionen (20) um 180° um ihre Mittelpunkte gedreht abgelegt werden.

15. Verfahren nach Anspruch 14, **dadurch gekennzeichnet, dass** das Übergeben der Blisterpackungen (4, 6) von der Stanzstation (10), dem Transportmittel oder dem Zwischenspeicher zu der Zwischenablage (12) gleichzeitig erfolgt.

## Claims

1. Device (2) for transferring blister packs (4, 6), having a first transfer unit (8) for transferring the blister packs (4, 6) from a punching station (10), a transport means or a temporary store to a temporary depository (12), and having a second transfer unit (14) for transferring the blister packs (4, 6) from the temporary depository (12) onto a conveying means (16) or into a store;
wherein the second transfer unit (14) has a suction arm (24, 25) which is movable between a receiving position for receiving a plurality of blister packs (4, 6) from a plurality of temporary depository positions (22) on the temporary depository (12) and a dispensing position for depositing the plurality of blister packs (4, 6) in a plurality of final depository positions (26) on the conveying means (16) or in the store;
wherein the suction arm (24, 25) has a first segment (30, 32) and a second segment (31, 33), wherein the first segment (30, 32) of the suction arm (24, 25) is fastened so as to be rotatable about an associated first axis (A1);
wherein the first segment (30, 32) of the suction arm (24, 25) has a portion on which the second segment (31, 33) is fastened so as to be rotatable about a variable-position second axis (A2, A2') which runs so as to be substantially perpendicular to the first axis (A1), wherein a suction device (34) for suctioning and holding the blister packs (4, 6) is disposed on the second segment (31, 33);
wherein the suction arm (24, 25) is designed and actuated in such a manner that the movement of the suction arm (24, 25) from the receiving position to the dispensing position and back is a combined movement which is composed of at least a first rotating movement of the first segment (30, 32) and of the second segment (31, 33) about the first axis (A1) and a second rotating movement of the second segment (31, 33) about the second axis (A2, A2');
wherein the suction arm (24, 25) is designed and actuated in such a manner that the blister packs (4, 6) in the temporary depository positions (22) are received simultaneously from above by the suction device (34) of the suction arm (24, 25), and are likewise deposited simultaneously from above in the final depository positions (26);
wherein the plurality of temporary depository positions (22) are disposed beside one another in a row parallel to the first axis (A1) and conjointly form a temporary depository position region (23, 23'), and wherein the plurality of final depository positions (26) are disposed beside one another in a row parallel to the first axis (A1) and conjointly form a final depository position region (27).

2. Device (2) according to Claim 1, **characterized in that** the second axis (A2) of the suction arm (24) is disposed in such a manner that said second axis (A2) of the suction arm (24) during the first rotating movement of the first segment (30) of the suction arm (24) moves in a plane (E) which intersects in each case the temporary depository position region (23) and the final depository position region (27) in a straight line (L), wherein the lines (L) are disposed in the region of a centre of the temporary depository position region (23) and a centre of the final depository position region (27).

3. Device (2) according to Claim 1, **characterized in that** the second axis (A2, A2') of the suction arm (24, 25) is disposed in such a manner that said second axis (A2, A2') of the suction arm (24, 25) during the first rotating movement of the first segment (30, 32) of the suction arm (24, 25) moves in a plane (E1, E2) which intersects the temporary depository position region (23, 23') or its lateral projection in a straight line (L1, L2) which is laterally offset from the centre (M1, M2) of the temporary depository position region (23, 23').

4. Device (2) according to one of the preceding claims, **characterized in that** the second segment (31, 33), and thus the blister packs (4, 6) held on the suction device (34), perform a rotating movement of substantially 180° about the second axis (A2, A2') when the suction arm (24, 25) moves from the receiving position to the dispensing position or vice versa.

5. Device (2) according to one of the preceding claims, **characterized in that** the first segment (30, 32) performs a rotating movement of 120° to 180° about the first axis (A1) when the suction arm (24, 25) moves from the receiving position to the dispensing position or vice versa.

6. Device (2) according to one of the preceding claims, **characterized in that** the suction arm (24, 25) is mounted so as to be displaceable parallel to the first axis (A1).

7. Device (2) according to one of the preceding claims, **characterized in that** the suction device (34) has a plurality of suction heads (36) which are fastened to the second segment (31, 33) by means of at least one support arm (38).

8. Device (2) according to Claim 7, **characterized in that** the at least one support arm (38) is rigidly fastened to the second segment (31, 33).

9. Device (2) according to Claim 7 or 8, **characterized in that** the at least one support arm (38) in the receiving position and in the dispensing position protrudes in an obliquely downward manner from the second segment (31, 33).

10. Method for transferring blister packs (4, 6) from a punching station (10), a transport means or a temporary store to a temporary depository (12), and from the temporary depository (12) to a conveying means (16) or to a store by means of a device, said method comprising the following steps:
- transferring a plurality of blister packs (4, 6) from the punching station (10), the transport means or the temporary store to the temporary depository (12), wherein the blister packs (4, 6) are deposited beside one another in a row in a plurality of temporary depository positions (22) on the temporary depository (12);
- receiving the plurality of blister packs (4, 6) in the plurality of temporary depository positions (22) from the temporary depository (12), moving the blister packs (4, 6) and depositing the blister packs (4, 6) in a plurality of final depository positions (26) on the conveying means (16) or in the store, wherein the blister packs (4, 6) in the final depository positions (26) are disposed beside one another in a row which is parallel to the row of the blister packs (4, 6) in the temporary depository positions (22);
wherein the blister packs (4, 6) in the temporary depository positions (22) are simultaneously received from above, and likewise simultaneously deposited from above in the final depository positions (26) on the conveying means (16) or in the store, and wherein the blister packs (4, 6) in the final depository positions (26) in comparison to the temporary depository positions (22) are deposited with the same side facing upwards but so as to be rotated by 180° about the centre of said blister packs (4, 6); and
wherein the method is carried out by a device (2) for transferring blister packs (4, 6) according to one of Claims 1 to 9.

11. Method according to Claim 10, **characterized in that** the receiving, the moving, and the depositing of the blister packs (4, 6) from the temporary depository (12) onto the conveying means (16) or into the store is carried out by means of a suction arm (24, 25) which carries out a reciprocating pivoting movement.

12. Method according to Claim 10 or 11, **characterized in that**, in the case of an even number of blister packs (4, 6), all blister packs (4, 6) in the final depository positions (26) are deposited at positions which are swapped in comparison to the temporary depository positions (22); or **in that**, in the case of an odd number of blister packs (4, 6), all blister packs (4, 6), except for a central blister pack (4, 6), in the final depository positions (26) are deposited at positions which are swapped in comparison to the temporary depository positions (22).

13. Method according to one of Claims 10 to 12, **characterized in that** the transferring of the blister packs (4, 6) from the punching station (10), the transport means or the temporary store to the temporary depository (12) comprises the following steps:
receiving the plurality of blister packs (4, 6) in a plurality of preparatory positions (20) from the punching station (10), the transport means or the temporary store, moving the blister packs (4, 6) and depositing the blister packs (4, 6) in the temporary depository positions (22) on the temporary depository (12), wherein the blister packs (4, 6) are deposited from above in the temporary depository positions (22) onto the temporary depository (12).

14. Method according to Claim 13, **characterized in that** the blister packs (4, 6) in the preparatory positions (20) are disposed beside one another in a row parallel to the rows of the blister packs (4, 6) in the temporary depository positions (22) and the final depository positions (26), and **in that** the blister packs (4, 6) in the temporary depository positions (22) are deposited so as to be rotated by 180° about the centre of said blister packs (4, 6) in comparison to the preparatory positions (20).

15. Method according to Claim 14, **characterized in that** the transferring of the blister packs (4, 6) from the punching station (10), the transport means or the temporary store to the temporary depository (12) takes place simultaneously.

## Revendications

1. Dispositif (2) pour le transfert d'emballages-blister (4, 6) avec une première unité de transfert (8) pour le transfert des emballages-blister (4, 6) d'un poste de découpe (10), d'un moyen de transport ou d'un magasin intermédiaire vers une tablette intermédiaires (12) et avec une deuxième unité de transfert (14) pour le transfert des emballages-blister (4, 6) de la tablette intermédiaires (12) sur un moyen de transport (16) ou dans un magasin,
la deuxième unité de transfert (14) comprenant un bras à ventouses (24, 25) qui est mobile entre une position de réception pour recevoir une pluralité d'emballages-blister (4, 6) à partir d'une pluralité de positions de dépose intermédiaires (22) sur la tablette intermédiaires (12) et une position de dépose pour déposer la pluralité d'emballages-blister (4, 6) dans une pluralité de positions de dépose finales (26) sur le moyen de transport (16) ou dans le magasin,
le bras à ventouses (24, 25) comprenant un premier segment (30, 32) et un deuxième segment (31, 33), le premier segment (30, 32) du bras à ventouses (24, 25) étant fixé de manière à être apte à tourner autour d'un premier axe associé (A1),
le premier segment (30, 32) du bras à ventouses (24, 25) présentant une section sur laquelle le deuxième segment (31, 33) est fixé de manière rotative autour d'un deuxième axe (A2, A2') variable en position et s'étendant sensiblement perpendiculairement au premier axe (A1), un dispositif d'aspiration (34) étant disposé sur le deuxième segment (31, 33) pour aspirer et maintenir les emballages-blister (4, 6),
le bras à ventouses (24, 25) étant conçu et commandé de telle sorte que le mouvement du bras à ventouses (24, 25) de la position de réception à la position de dépose et inversement soit un mouvement combiné qui se compose au moins d'un premier mouvement de rotation du premier segment (30, 32) et du deuxième segment (31, 33) autour du premier axe (A1) et d'un deuxième mouvement de rotation du deuxième segment (31, 33) autour du deuxième axe (A2, A2'),
le bras à ventouses (24, 25) étant conçu et commandé de telle sorte que les emballages-blister (4, 6) soient simultanément saisis par le haut dans les positions de dépose intermédiaires (22) par le dispositif d'aspiration (34) du bras à ventouses (24, 25) et également déposés simultanément par le haut dans les positions de dépose finales (26),
la pluralité de positions de dépose intermédiaires (22) étant disposées côte à côte en une rangée parallèle au premier axe (A1) et forment ensemble une zone de positions de dépose intermédiaires (23, 23'), et la pluralité de positions de dépose finales (26) étant disposées côte à côte en une rangée parallèle au premier axe (A1) et forment ensemble une zone de positions de dépose finales (27).

2. Dispositif (2) selon la revendication 1, **caractérisé en ce que** le deuxième axe (A2) du bras à ventouses (24) est agencé de manière à se déplacer, pendant le premier mouvement de rotation du premier segment (30) du bras à ventouses (24), dans un plan (E) coupant la zone de positions de dépose intermédiaires (23) et la zone de positions de dépose finales (27) respectivement selon une ligne droite (L), lesdites lignes (L) étant situées au niveau d'un centre de la zone de positions de dépose intermédiaires (23) et d'un centre de la zone de positions de dépose finales (27).

3. Dispositif (2) selon la revendication 1, **caractérisé en ce que** le deuxième axe (A2, A2') du bras à ventouses (24, 25) est agencé de telle sorte que, pendant le premier mouvement de rotation du premier segment (30, 32) du bras à ventouses (24, 25), il se déplace dans un plan (E1, E2) qui coupe la zone de positions de dépose intermédiaires (23, 23') ou sa projection latérale en une ligne droite (L1, L2) qui est décalée latéralement par rapport au centre (M1, M2) de la zone de positions de dépose intermédiaires (23, 23').

4. Dispositif (2) selon l'une des revendications précédentes, **caractérisé en ce que** le deuxième segment (31, 33) et donc les emballages-blister (4, 6) maintenus sur le dispositif d'aspiration (34) effectue un mouvement de rotation autour du deuxième axe (A2, A2') de sensiblement 180° lorsque le bras à ventouses (24, 25) se déplace de la position de réception à la position de dépose ou inversement.

5. Dispositif (2) selon l'une des revendications précédentes, **caractérisé en ce que** le premier segment (30, 32) effectue un mouvement de rotation autour du premier axe (A1) de 120° à 180° lorsque le bras à ventouses (24, 25) se déplace de la position de réception à la position de dépose ou inversement.

6. Dispositif (2) selon l'une des revendications précédentes, **caractérisé en ce que** le bras à ventouses (24, 25) est monté coulissant parallèlement au premier axe (A1).

7. Dispositif (2) selon l'une des revendications précédentes, **caractérisé en ce que** le dispositif d'aspiration (34) comprend plusieurs têtes d'aspiration (36) qui sont fixées au deuxième segment (31, 33) au moyen d'au moins un bras de support (38).

8. Dispositif (2) selon la revendication 7, **caractérisé en ce que** ledit au moins un bras de support (38) est fixé rigidement au deuxième segment (31, 33).

9. Dispositif (2) selon la revendication 7 ou la revendication 8, **caractérisé en ce que** ledit au moins un bras de support (38) fait saillie obliquement vers le bas depuis le deuxième segment (31, 33) dans la position de réception et dans la position de dépose.

10. Procédé de transfert d'emballages-blister (4, 6) d'un poste de découpe (10) d'un moyen de transport ou d'un magasin intermédiaire vers une tablette intermédiaire et de la tablette intermédiaires (12) vers un moyen de transport (16) ou vers un magasin au moyen d'un dispositif, comprenant les étapes suivantes :
- transfert de plusieurs emballages-blister (4, 6) du poste de découpe (10), du moyen de transport ou du magasin intermédiaire à la tablette intermédiaires (12), les emballages-blister (4, 6) étant déposés sur la tablette intermédiaires (12) en une rangée les uns à côté des autres dans plusieurs positions de dépose intermédiaires (22) ;
- réception de la pluralité d'emballages-blister (4, 6) dans la pluralité de positions de dépose intermédiaires (22) à partir de la tablette intermédiaires (12), déplacement des emballages-blister (4, 6) et dépose des emballages-blister (4, 6) dans une pluralité de positions de dépose finales (26) sur le moyen de transport (16) ou dans le magasin, les emballages-blister (4, 6) étant disposés dans les positions de dépose finales (26) en une rangée côte à côte qui est parallèle à la rangée d'emballages-blister (4, 6) dans les positions de dépose intermédiaires (22) ;
les emballages-blister (4, 6) étant simultanément saisis par le haut dans les positions de dépose intermédiaires (22) et sont également déposés simultanément par le haut dans les positions de dépose finales (26) sur le moyen de transport (16) ou dans le magasin, et les emballages-blister (4, 6) étant déposés dans les positions de dépose finales (26) avec le même côté vers le haut, mais avec une rotation de 180° de leurs centres par rapport aux positions de dépose intermédiaires (22), et
ledit procédé étant mis en oeuvre avec un dispositif (2) de transfert d'emballages-blister (4, 6) selon l'une quelconque des revendications 1 à 9.

11. Procédé selon la revendication 10, **caractérisé en ce que** la préhension, le déplacement et la dépose des emballages-blister (4, 6) depuis la tablette intermédiaires (12) sur le moyen de transport (16) ou dans le magasin sont réalisés au moyen d'un bras à ventouses (24, 25) effectuant un mouvement de pivotement alternatif.

12. Procédé selon la revendication 10 ou la revendication 11, **caractérisé en ce que**, pour un nombre pair d'emballages-blister (4, 6), tous les emballages-blister (4, 6) sont déposés dans les positions de dépose final (26) dans des positions inversées par rapport aux positions de dépose intermédiaires (22) ; ou **en ce que**, dans le cas d'un nombre impair d'emballages-blister (4, 6), tous les emballages-blister (4, 6), à l'exception d'un emballage-blister central (4, 6), sont déposés dans les positions de dépose final (26) à des positions inversées par rapport aux positions de dépose intermédiaires (22).

13. Procédé selon l'une des revendications 10 à 12, **caractérisé en ce que** le transfert des emballages-blister (4, 6) du poste de découpe (10), du moyen de transport ou du magasin intermédiaire vers la tablette intermédiaires (12) comprend les étapes suivantes :
réception de la pluralité d'emballages-blister (4, 6) dans une pluralité de positions de fourniture (20) depuis le poste de découpe (10), le moyen de transport ou le magasin intermédiaire, déplacement des emballages-blister (4, 6) et dépôt des emballages-blister (4, 6) dans les positions de dépose intermédiaires (22) sur la tablette intermédiaires (12), les emballages-blister (4, 6) étant déposés par le haut dans les positions de dépose intermédiaires (22) sur la tablette intermédiaires (12).

14. Procédé selon la revendication 13, **caractérisé en ce que** les emballages-blister (4, 6) sont disposés dans les positions de fourniture (20) en une rangée les uns à côté des autres, parallèlement aux rangées d'emballages-blister (4, 6) dans les positions de dépose intermédiaires (22) et les positions de dépose finales (26), et **en ce que** les emballages-blister (4, 6) sont déposés dans les positions de dépose intermédiaires (22) tournées de 180° autour de leurs points centraux par rapport aux positions de fourniture (20).

15. Procédé selon la revendication 14, **caractérisé en ce que** le transfert des emballages-blister (4, 6) du poste de découpe (10), du moyen de transport ou du magasin intermédiaire vers la tablette intermédiaires (12) s'effectue simultanément.
